# FASCICULE DE BREVET EUROPEEN

(11) **EP 2 877 763 B1**
(45) Date de publication et mention de la délivrance du brevet: **20.07.2016**
(21) Numéro de dépôt: 13727284.5
(22) Date de dépôt: 14.05.2013
(51) Int. Cl.: F16K 11/085, F16K 11/076, B01F 5/10

(54) **DISTRIBUTEUR FLUIDIQUE ET DISPOSITIF DE RECONSTITUTION IN SITU ET D'ADMINISTRATION**
VENTIL MIT DIREKTIONALER STEUERUNG FÜR FLÜSSIGKEITEN UND VORRICHTUNG ZUR IN-SITU-REKONSTITUTION UND -VERABREICHUNG
DIRECTIONAL CONTROL VALVE FOR FLUID AND DEVICE FOR IN-SITU RECONSTITUTION AND ADMINISTERING

(30) Priorité: 27.07.2012 FR 1257291
(43) Date de publication de la demande: 03.06.2015
(73) Titulaire: Eveon, 38330 Montbonnot Saint Martin (FR)
(72) Inventeur: WATTELLIER, Arnaud, 38320 Eybens (FR); DEHAN, Christophe, 38330 Saint Ismier (FR)
(74) Mandataire: Prugneau, Philippe
(86) Numéro de dépôt international: PCT/FR2013/051047
(87) Numéro de publication internationale: WO 2014/016479

(56) Documents cités:
- WO-A1-2012/085428
- US-A1- 2008 029 168
- US-B1- 6 427 713

## Description

### Domaine technique

L'invention concerne un distributeur fluidique adapté pour la reconstitution in-situ d'une solution par mélange de deux constituants provenant d'un premier réservoir et d'un second réservoir, le distributeur fluidique comprenant un corps définissant une chambre axiale et comportant des premier et second ports d'entrée/sortie radiaux destinés à être raccordés au premier réservoir et à une pompe de circulation, et un port d'administration radial adapté pour la sortie de la solution, les premier et second ports d'entrée/sortie et le port d'administration communiquant avec la chambre, un maneton rotatif logé dans la chambre et traversé par des canaux de liaison, le maneton comportant des troisième et quatrième ports d'entrée/sortie axiaux destinés à être raccordés au second réservoir et communiquant avec les canaux de liaison, les canaux de liaison étant agencés pour raccorder fluidiquement et sélectivement les premier, second, troisième et quatrième ports d'entrée/sortie et le port d'administration selon la position angulaire du maneton par rapport au corps de sorte à, dans une première position angulaire, raccorder le premier port d'entrée/sortie au troisième port d'entrée/sortie et obturer le second port d'entrée/sortie et le quatrième port d'entrée/sortie pour permettre, au moyen de la pompe de circulation, le transfert du constituant entre le premier réservoir et le second réservoir.

L'invention concerne également un dispositif de reconstitution in situ et d'administration d'une solution obtenue par mélange de deux constituants provenant d'un premier et d'un second réservoir, le dispositif de reconstitution in situ et d'administration comprenant un distributeur fluidique comportant un corps et un maneton mobile en rotation dans ledit corps, des moyens d'entraînement motorisés du maneton, un élément de circuit fluidique agencé pour raccorder les premier et second ports d'entrée/sortie.

### Technique antérieure

Il est fréquemment nécessaire de mélanger des constituants pour reconstituer et homogénéiser, juste avant utilisation, une solution. C'est notamment le cas pour des solutions à vocation thérapeutique, dans les domaines médical ou vétérinaire ou à d'autres fins par exemple dans le domaine cosmétique. Les mélanges ou reconstitutions de solution, réalisées juste avant utilisation de cette même solution, sont très utiles lorsque la solution est peu stable après son mélange, sa reconstitution. C'est particulièrement le cas pour les nouvelles molécules thérapeutiques d'origine biologique, qui ne sont conservables principalement que sous forme de poudre solide à mettre en suspension ou lyophilisée ou à reconstituer juste avant administration. Pour réaliser une reconstitution, on utilise par exemple un premier constituant sous forme de poudre solide, de lyophilisé, de déshydraté ou de concentré, et un second constituant de type solvant. Pour l'obtention d'une solution homogène, la reconstitution nécessite le suivi d'un protocole spécifique. Une fois obtenue, la solution peut être administrée par tout moyen adapté. Par administration, on entend notamment tout acte permettant de faire absorber un constituant à un utilisateur, que ce soit par une injection, une perfusion, par voie orale ou cutanée, ou par tout autre moyen adapté.

La reconstitution d'une solution peut nécessiter de quatre à dix étapes manuelles requérant l'utilisation d'une ou plusieurs seringues, flacons, aiguilles et assimilées pour successivement :
- prélever un premier constituant, à l'aide d'une première seringue, dans un premier flacon,
- transférer le constituant prélevé, à l'aide de la première seringue, dans un second flacon contenant un second constituant tout en limitant les effets d'émulsion ou d'agglomération lors du transfert,
- brasser les premier et second constituants pour obtenir une solution homogène du mélange des premier et second constituants,
- prélever la solution à l'aide de la même ou d'une seconde seringue,
- administrer la solution à l'aide de la même seringue que lors du prélèvement mais généralement équipée d'une nouvelle aiguille spécifiquement adaptée pour l'injection.

Afin de respecter des conditions d'hygiène satisfaisantes, les seringues et flacons doivent être stériles, ce qui est contraignant. Par ailleurs, un temps d'attente prédéterminé doit être respecté entre les étapes de reconstitution. De plus, l'utilisation répétée de seringues à aiguille multiplie les risques de blessures du personnel réalisant les reconstitutions. Enfin, certaines reconstitutions mettent en jeu des substances cytotoxiques dont l'utilisation nécessite des installations d'aspiration d'air et de surveillance d'atmosphère. Ces installations représentent un coût supplémentaire non négligeable et ne peuvent être utilisées que dans des lieux spécifiques dédiés ce qui ne permet pas de répondre à la majorité des cas d'utilisation. Ainsi, les reconstitutions et l'administration de la solution obtenue doivent être réalisées par du personnel médical.

Il est donc nécessaire de proposer des dispositifs de reconstitution de type « fermé » permettant une reconstitution sans risque de contamination par le biais de liquide, poudre ou vapeur, et permettant de garantir un bon niveau d'asepsie. Il existe également un réel besoin pour des dispositifs de reconstitution d'utilisation simple et fiable pouvant être mis en oeuvre par des personnes sans formation médicale, et optionnellement d'administrer cette solution.

Pour reconstituer une solution à partir de deux constituants, il est possible d'utiliser des distributeurs fluidiques de type 6/3, à savoir avec six ports et trois positions tel que celui décrit dans la publication WO 2012/085 428. La construction de ces distributeurs fluidiques les rend toutefois compliqués à fabriquer.

### Exposé de l'invention

Le but de l'invention est de pallier aux inconvénients des distributeurs fluidiques existants en proposant un distributeur fluidique de construction simple permettant d'obtenir la reconstitution homogène d'une solution à partir du mélange de deux constituants, facile à utiliser par un utilisateur sans formation médicale, le distributeur fluidique étant optionnellement intégré à un dispositif de mélange et d'administration de la solution obtenue, par exemple par injection.

A cet effet, l'invention a pour objet un distributeur fluidique adapté pour la reconstitution in-situ d'une solution par mélange de deux constituants provenant d'un premier réservoir et d'un second réservoir, le distributeur fluidique comprenant un corps définissant une chambre axiale et comportant des premier et second ports d'entrée/sortie radiaux destinés à être raccordés au premier réservoir et à une pompe de circulation, et un port d'administration radial adapté pour la sortie de la solution, les premier et second ports d'entrée/sortie et le port d'administration communiquant avec la chambre, un maneton rotatif logé dans la chambre et traversé par des canaux de liaison, le maneton comportant des troisième et quatrième ports d'entrée/sortie axiaux destinés à être raccordés au second réservoir et communiquant avec les canaux de liaison, les canaux de liaison étant agencés pour raccorder fluidiquement et sélectivement les premier, second, troisième et quatrième ports d'entrée/sortie et le port d'administration selon la position angulaire du maneton par rapport au corps de sorte à, dans une première position angulaire, raccorder le premier port d'entrée/sortie au troisième port d'entrée/sortie et obturer le second port d'entrée/sortie et le quatrième port d'entrée/sortie pour permettre, au moyen de la pompe de circulation, le transfert du constituant entre le premier réservoir et le second réservoir, caractérisé en ce que les canaux de liaison sont agencés pour :
- dans une seconde position angulaire, raccorder le premier port d'entrée/sortie au troisième port d'entrée/sortie et le second port d'entrée/sortie au quatrième port d'entrée/sortie pour permettre, au moyen de la pompe de circulation, le transfert et le brassage du mélange entre les premier et second réservoirs,
- dans une troisième position angulaire, raccorder le premier, port d'entrée/sortie au port d'administration et obturer le second port d'entrée/sortie, le troisième port d'entrée/sortie et le quatrième port d'entrée/sortie pour permettre, au moyen de la pompe de circulation, l'administration de ladite solution obtenue.

Dans la présente, les termes, premier, second, troisième sont utilisés de manière non limitative pour différencier les éléments similaires.

L'idée à la base de l'invention est de prévoir une configuration particulière des canaux de liaison qui permet d'obtenir un distributeur fluidique de type 5/3, à savoir cinq ports et trois positions, de conception et utilisation simples.

Selon un premier mode de réalisation du distributeur fluidique de l'invention, les canaux de liaison comportent les trois canaux de liaison suivants :
- un premier canal de liaison en T inversé dont la branche centrale est pourvue du troisième port d'entrée/sortie, dont une première branche radiale est pourvue d'une première embouchure radiale et dont une seconde branche radiale est pourvue d'une seconde embouchure radiale, le premier canal de liaison étant agencé de sorte que :
   ∘ dans la première position angulaire, la première embouchure radiale est située en regard du premier port d'entrée/sortie et la seconde embouchure radiale est obturée par la paroi de la chambre,
   o dans la seconde position angulaire, la seconde embouchure radiale est située en regard du premier port d'entrée/sortie et la première embouchure radiale est obturée par la paroi de la chambre,
   ∘ dans la troisième position angulaire, les première et seconde embouchures radiales sont obturées par la paroi de la chambre,
- un second canal de liaison en L inversé dont la grande barre est pourvue du quatrième port d'entrée/sortie et dont la petite barre est pourvue d'une embouchure radiale, le second canal de liaison étant agencé de sorte que :
   ∘ dans les première et troisième positions angulaires, l'embouchure radiale est obturée par la paroi de la chambre,
   ∘ dans la seconde position angulaire, l'embouchure radiale est située en regard du second port d'entrée/sortie,
- un troisième canal de liaison traversant radialement le maneton et pourvu d'une première embouchure radiale et d'une seconde embouchure radiale, le troisième canal de liaison étant agencé de sorte que :
   ∘ dans les première et seconde positions angulaires, les première et seconde embouchures radiales sont obturées par la paroi de la chambre,
   ∘ dans la troisième position angulaire, la première embouchure radiale est située en regard du premier port d'entrée/sortie et la seconde embouchure radiale est située en regard du port d'administration.

Le distributeur fluidique selon le premier mode de réalisation de l'invention peut présenter les particularités suivantes :
- les axes des première et seconde embouchures radiales du premier canal de liaison, de la première embouchure radiale du troisième canal de liaison et le premier port d'entrée/sortie sont compris dans un premier plan radial,
- les axes de l'embouchure radiale du second canal de liaison et le second port d'entrée/sortie sont compris dans un second plan radial distinct du premier plan radial,
- l'axe de la seconde embouchure radiale du troisième canal de liaison et le port d'administration sont compris dans un troisième plan radial distinct des premier et second plans radiaux.

Le distributeur fluidique selon le premier mode de réalisation de l'invention peut présenter les particularités suivantes :
- le premier port d'entrée/sortie, le second port d'entrée/sortie et le port d'administration sont situés dans un même plan médian du corps, les premier et second canaux de liaison sont situés dans un même premier plan axial du maneton,
- le troisième canal de liaison est situé dans un second plan axial du maneton angulairement décalé de 90° par rapport au premier plan axial,
de sorte que le passage entre les première et seconde positions angulaires est obtenu par la rotation d'un demi-tour du maneton dans le corps et que, le passage entre les première et troisième positions et le passage entre les seconde et troisième positions sont respectivement obtenus par la rotation d'un quart de tour du maneton dans le corps.

Selon un second et un troisième mode de réalisation du distributeur fluidique de l'invention, les canaux de liaison comportent les deux canaux de liaison suivants :
- un premier canal de liaison en L inversé comportant une pluralité de petites barres, dont la grande barre est pourvue du quatrième port d'entrée/sortie, dont une première petite barre est pourvue d'une première embouchure radiale, dont d'une seconde petite barre est pourvue d'une seconde embouchure radiale, dont d'une troisième petite barre est pourvue d'une troisième embouchure radiale, le premier canal de liaison étant agencé de sorte que :
   ∘ dans la première position angulaire, les première, seconde et troisième embouchures radiales sont obturées par la paroi de la chambre,
   ∘ dans la seconde position angulaire, la seconde embouchure radiale est située en regard du premier port d'entrée/sortie et les première et troisième embouchures radiales sont obturées par la paroi de la chambre,
   ∘ dans la troisième position angulaire, la troisième embouchure radiale est située en regard du premier port d'entrée/sortie, la première embouchure radiale est située en regard du port d'administration, la seconde embouchure radiale est obturée par la paroi de la chambre,
- un second canal de liaison en T inversé comportant une pluralité de branches radiales, dont la branche centrale est pourvue du troisième port d'entrée/sortie, dont une première branche radiale est pourvue d'une première embouchure radiale, dont d'une seconde branche radiale est pourvue d'une seconde embouchure radiale, dont d'une troisième branche radiale est pourvue d'une troisième embouchure radiale, le second canal de liaison étant agencé de sorte que :
   ∘ dans la première position angulaire, la première embouchure radiale est située en regard du second port d'entrée/sortie et les seconde et troisième embouchures radiales sont obturées par la paroi de la chambre,
   ∘ dans la seconde position angulaire, la seconde embouchure radiale est située en regard du second port d'entrée/sortie et les première et troisième embouchures radiales sont obturées par la paroi de la chambre,
   ∘ dans la troisième position angulaire, la troisième embouchure radiale est située en regard du second port d'entrée/sortie et les seconde et troisième embouchures radiales sont obturées par la paroi de la chambre.

Selon le second mode de réalisation, le distributeur fluidique peut comporter l'ensemble des particularités suivantes :
- les axes des seconde et troisième embouchures radiales du premier canal de liaison et le premier port d'entrée/sortie sont compris dans un premier plan radial,
- les axes des première, seconde et troisième embouchures radiales du second canal de liaison et le second port d'entrée/sortie sont compris dans un second plan radial,
- l'axe de la première embouchure radiale du premier canal de liaison et le port d'administration sont compris dans un troisième plan radial distinct des premier et second plans radiaux.

Selon le second mode de réalisation, le distributeur fluidique peut comporter les particularités suivantes :
- les premier, second ports d'entrée/sortie et le port d'administration sont sensiblement situés dans un même plan médian du corps, le premier canal de liaison est situé dans un premier plan axial du maneton de sorte que le passage entre les première et seconde positions angulaires est obtenu par la rotation d'un demi tour du maneton dans le corps,
- les première et troisième embouchures radiales du second canal de liaison sont situées dans un second plan axial du maneton et la seconde embouchure radiale est située dans un troisième plan axial du maneton angulairement décalé d'environ 90° par rapport au second plan axial de sorte que le passage entre les première et troisième positions et le passage entre les seconde et troisième positions sont obtenus par la rotation d'un quart de tour du maneton dans le corps.

Selon le troisième mode de réalisation, le distributeur fluidique peut comporter l'ensemble des particularités suivantes :
- les axes des première et troisième embouchures radiales du premier canal de liaison et le premier port d'entrée/sortie sont compris dans un premier plan radial,
- les axes des première, seconde et troisième embouchures radiales du second canal de liaison et le second port d'entrée/sortie sont compris dans un second plan radial,
- l'axe de la seconde embouchure radiale du premier canal de liaison et le port d'administration sont compris dans un troisième plan radial distinct des premier et second plans radiaux.

De manière avantageuse, le distributeur fluidique selon l'invention comporte un joint annulaire prévu entre le maneton et le corps, le joint annulaire comportant une partie pleine traversée par des orifices destinés à être en regard des première embouchure radiale, seconde embouchure radiale, troisième embouchure radiale du premier canal de liaison, des première embouchure radiale, seconde embouchure radiale, troisième embouchure radiale du second canal de liaison et des première embouchure radiale et une seconde embouchure radiale du troisième canal de liaison, la partie pleine étant agencée pour assurer l'étanchéité sélective entre les canaux de liaison.

L'invention s'étend à un dispositif de reconstitution in situ et d'administration d'une solution obtenue par mélange de deux constituants provenant d'un premier et d'un second réservoir, le dispositif de reconstitution in situ et d'administration comprenant un distributeur fluidique comportant un corps et un maneton mobile en rotation dans le corps, des moyens d'entraînement motorisés du maneton, un élément de circuit fluidique agencé pour raccorder les premier et second ports d'entrée/sortie, caractérisé en ce qu'il comprend un distributeur fluidique selon l'une quelconque des revendications précédentes, des moyens d'entraînement motorisés du maneton, un élément de circuit fluidique agencé pour raccorder les premier et second ports d'entrée/sortie et le premier réservoir, une pompe de circulation raccordée au élément de circuit fluidique.

### Présentation sommaire des dessins

La présente invention sera mieux comprise et d'autres avantages apparaîtront à la lecture de la description détaillée de plusieurs modes de réalisation pris à titre d'exemple nullement limitatif et illustré par les dessins annexés, dans lesquels :
- la figure 1 est une vue en perspective éclatée du distributeur fluidique selon un premier mode de réalisation de l'invention ;
- les figures 2 et 3 sont respectivement des vues en coupe et frontale du distributeur fluidique de la figure 1 dans une première position dite de transfert ;
- les figures 4 et 5 sont des vues similaires aux figures 2 et 3 illustrant une seconde position dite de reconstitution du distributeur fluidique de la figure 1 ;
- les figures 6 et 7 sont des vues similaires aux figures 2 et 3 illustrant une troisième position dite d'administration du distributeur fluidique de la figure 1 dans laquelle l'administration est réalisée à partir du premier réservoir ;
- les figures 8 et 9 sont des vues respectivement en coupe de deux modes de réalisation d'un dispositif de reconstitution in situ et d'administration pourvu d'un distributeur fluidique selon le premier mode de réalisation de l'invention ;
- la figure 10 est une vue schématique du distributeur fluidique selon un second mode de réalisation de l'invention ;
- les figures 11 à 13 sont des vues schématiques du distributeur fluidique de la figure 10 respectivement dans des première, seconde et troisième positions similaires aux précédentes, l'administration étant réalisée à partir du second réservoir ;
- la figure 14 est une vue schématique du distributeur fluidique des figures 11 à 13 illustré dans une troisième position équivalente à celle de la figure 13 et dans laquelle, l'administration étant réalisée à partir du second réservoir ;
- la figure 15 est une vue schématique similaire à la figure 10 du distributeur fluidique selon un troisième mode de réalisation de l'invention ;
- les figures 16 à 18 sont des vues schématiques du distributeur fluidique de la figure 15 similaires aux figures 11 à 13.

### Description des modes de réalisation

Le distributeur fluidique et le dispositif de reconstitution in situ et d'administration selon l'invention peuvent être utilisés pour le mélange d'un premier constituant liquide avec second constituant de tout type (concentré, lyophilisat, poudre, ...). La solution reconstituée in-situ peut être administrée par toute technique adaptée. De manière non limitative, la description qui suit porte sur un distributeur fluidique intégrable à un dispositif de mélange de constituants pharmaceutiques et d'administration de la solution reconstituée par injection.

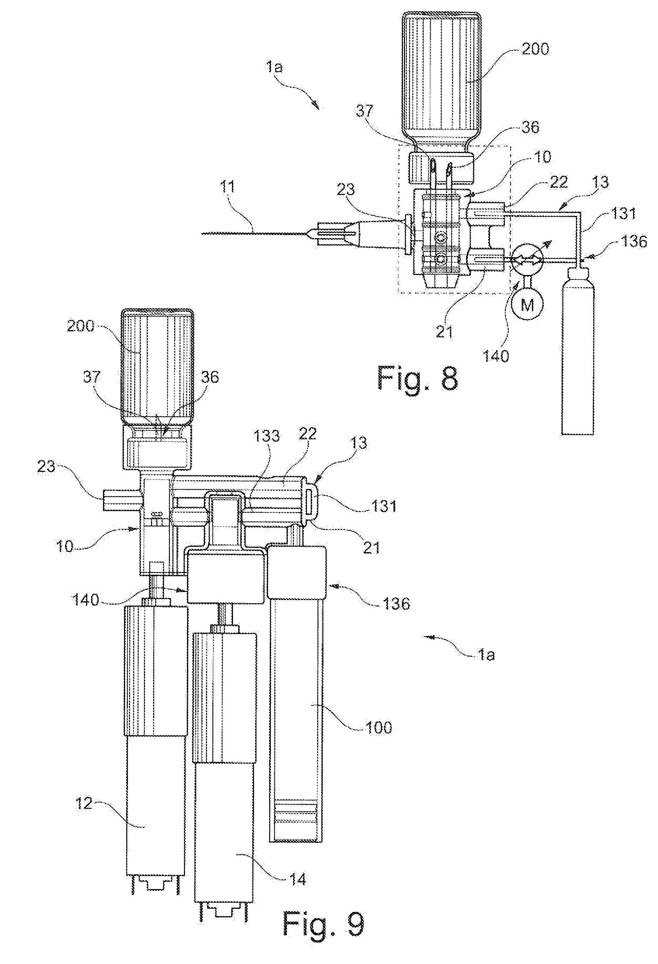

En référence aux figures 8 et 9, le dispositif de mélange et d'administration 1a comporte un distributeur fluidique 10a, une aiguille d'injection 11 (représentée seulement sur la figure 8), des moyens d'entraînement motorisés 12, un élément de circuit fluidique 13 et une pompe de circulation 14.

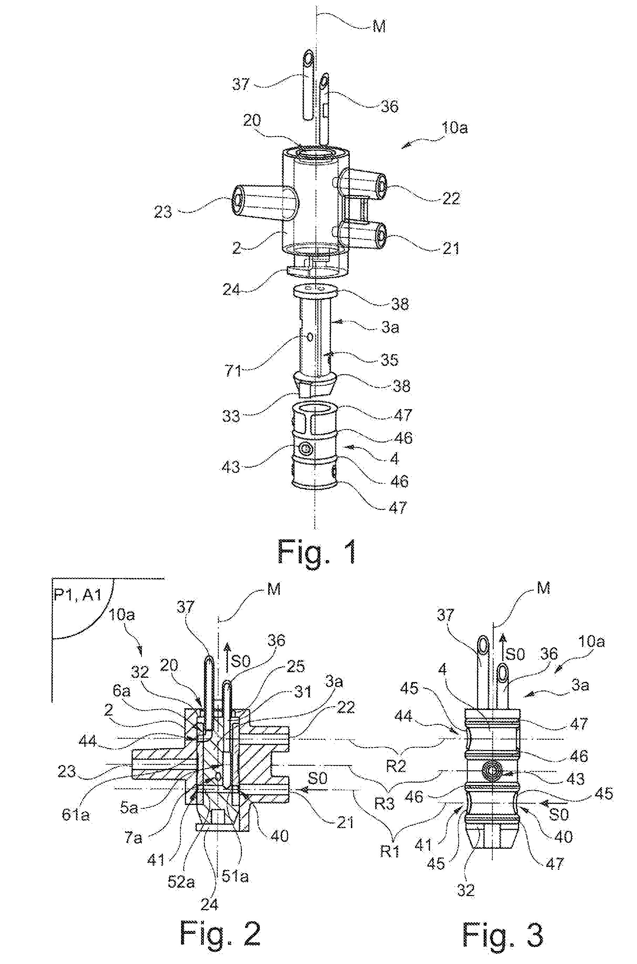

En référence en particulier aux figures 1 à 7, le distributeur fluidique 10a, selon un premier mode de réalisation de l'invention comporte un corps 2, un maneton 3a et un joint annulaire 4 prévu entre le corps 2 et le maneton 3a.

Le corps 2 présente une forme globalement tubulaire et définit une chambre 20 cylindrique débouchant axialement de part et d'autre du corps 2. Le corps 2 comporte des premier et second ports d'entrée/sortie 21, 22 radiaux et un port d'administration 23 radial s'étendant radialement de la chambre 20 et disposés dans un même plan médian P1 du corps 2. Les premier et second ports d'entrée/sortie 21, 22 sont diamétralement opposés au port d'administration 23. L'axe du premier port d'entrée/sortie 21 est situé dans un premier plan radial R1, l'axe du second port d'entrée/sortie 22 est situé dans second plan radial R2 distinct du premier plan radial R1 et l'axe du port d'administration 23 est situé dans un troisième plan radial R3 prévu entre les premier et second plans radiaux R1, R2. Le corps 2 comporte une butée angulaire et axiale 24 dont la fonction est précisée plus loin. De plus, la chambre 20 est pourvue d'un épaulement intérieur 25 dont la fonction est également précisée plus loin. Les premier et second ports d'entrée/sortie 21, 22 sont destinés à être raccordés à la pompe de circulation 14 et à un premier réservoir 100 par l'intermédiaire de l'élément de circuit fluidique 13. Dans ce mode de réalisation, la pompe de circulation 14 est prévue entre le premier réservoir 100 et le premier port d'entrée/sortie 21. Le port d'administration 23 est adapté pour autoriser la sortie de la solution reconstituée et apte par exemple à recevoir l'emmanchement d'une aiguille d'injection 11 pour administrer la solution par injection.

Le maneton 3a présente une forme globalement cylindrique et porte le joint annulaire 4 qui présente une forme globalement tubulaire. Le joint annulaire 4 est par exemple réalisé en élastomère. Dans l'exemple illustré, le joint annulaire 4 est solidaire du maneton 3a sur lequel il peut être surmoulé. Le diamètre extérieur du joint annulaire 4 est sensiblement similaire à celui de la chambre 20. Ainsi, le maneton 3a portant le joint annulaire 4 peut être logé dans la chambre 20, le joint annulaire 4 assurant l'étanchéité entre le maneton 3a et le corps 2. Le maneton 3a est pourvu de troisième et quatrième ports d'entrée/sortie 31, 32 axiaux prévus en une même extrémité axiale du maneton 3a, chacun pourvu d'une aiguille de transfert 36, 37. Dans l'exemple illustré, chacun de ces troisième et quatrième ports d'entrée/sortie 31, 32 est pourvu d'une aiguille de transfert 36, 37 destinée à perforer le bouchon d'un second réservoir 200 par exemple de type flacon. Les aiguilles de transfert 36, 37 des troisième et quatrième ports d'entrée/sortie 31, 32 ont de préférence des longueurs différentes favorisant le brassage. Le maneton 3a est traversé par des canaux de liaison 5a, 6a, 7a raccordés aux troisième et quatrième ports d'entrée/sortie 31, 32. Les canaux de liaison 5a, 6a, 7a comportent un premier canal de liaison 5a, un second canal de liaison 6a et un troisième canal de liaison 7a indépendants les uns des autres. Ces canaux de liaison 5a, 6a, 7a ont par exemple une section sensiblement circulaire.

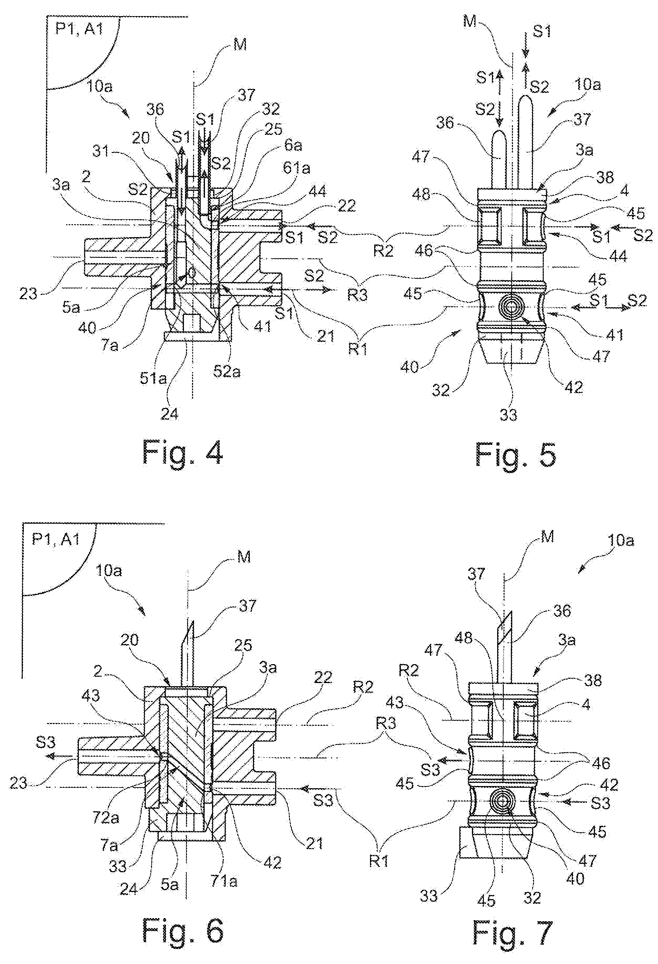

En référence en particulier aux figures 2 et 4, le premier canal de liaison 5a présente une forme en T inversé dont l'extrémité de la tige centrale débouche axialement en un troisième port d'entrée/sortie 31 axial, et dont les branches traversent radialement le maneton 3a et débouchent en une première embouchure radiale 51 a et une seconde embouchure radiale 52a prévues au niveau du premier plan radial R1 comprenant le premier port d'entrée/sortie 21.

En référence en particulier aux figures 2 et 4, le second canal de liaison 6a présente une forme en L inversé dont la grande barre débouche axialement en un quatrième port d'entrée/sortie 32 et dont la petite barre débouche radialement en une première embouchure radiale 61 a dont l'axe est sensiblement confondu au second plan radial R2 comprenant le second port d'entrée/sortie 22.

Les premier et second canaux de liaison 5a, 6a sont situés dans un même premier plan axial A1 du maneton 3a. La tige centrale du premier canal de liaison 5a et le second canal de liaison 6a sont disposés de part et d'autre de l'axe M du maneton 3a.

En référence en particulier à la figure 6, le troisième canal de liaison 7a est incliné et traverse latéralement le maneton 3a débouchant en une première embouchure radiale 71a dont l'axe est sensiblement confondu au premier plan radial R1 comprenant l'axe du premier port d'entrée/sortie 21 et en une seconde extrémité radiale 72a dont l'axe est sensiblement confondu au troisième plan radial R3 comprenant l'axe du port d'administration 23, les première et seconde embouchures radiales 71 a, 72a étant diamétralement opposées. L'axe du troisième canal de liaison 7a est situé dans un second plan axial A2 du maneton 3a. Dans l'exemple illustré, le second plan axial A2 du maneton 3a est décalé du premier plan axial A1 du maneton 3a d'un angle d'environ 90°. Le troisième canal de liaison7a traverse l'axe M du maneton 3a au-dessus des branches du premier canal de liaison 5a. En plus de cette disposition particulière du troisième canal de liaison 7a par rapport aux premier et second canaux de liaison 5a, 6a, les dimensions des canaux de liaison 5a, 6a, 7a sont prévus pour qu'il n'y ait pas d'interférence entre les premier, second canaux de liaison 5a, 6a et le troisième canal de liaison 7a.

Selon une variante de réalisation non représentée, le troisième canal de liaison peut être prévu de sorte que sa première extrémité débouche dans un troisième plan radial confondu avec le second plan radial comprenant le second port d'entrée/sortie.

En regard des premières et secondes embouchures radiales 51 a, 52a, 71a, 72a des premier et troisième canaux de liaison 5a, 7a et de la première embouchure radiale 61a du second canal de liaison 6, le joint annulaire 4 comporte des orifices de transfert 40-44 traversant et autorisant le passage du fluide. Les orifices de transfert 40-44 comportent ainsi un premier et un second orifices de transfert 40, 41 diamétralement opposés dont les axes sont prévus dans le premier plan radial R1 et respectivement en regard des axes des première et seconde embouchure radiale 51 a, 52a du premier canal de liaison 5a. Les premier et second orifices de transfert 40, 41 sont ainsi prévus avec leurs axes dans le premier plan axial A1. Les orifices de transfert 40-44 comportent également un troisième orifice de transfert 42 prévu entre les premier et second orifices de transfert 40, 41 avec un axe dans le premier plan radial R1, dans le second plan axial A2 et en regard de la première embouchure radiale 71a du troisième canal de liaison 7a. De plus, les canaux de liaison 40-44 comportent un quatrième orifice de transfert 43 avec son axe prévu dans le second plan radial R2 et dans le second plan axial A2, en regard de la seconde embouchure radiale 72a du troisième canal de liaison 7a. Enfin, les canaux de liaison 40-44 comportent un cinquième orifice de transfert 44 dont l'axe est prévu dans le second plan radial R2 et dans le premier plan axial A1, en regard de la première embouchure radiale 61a du second canal de liaison 6a. Chaque orifice de transfert 40-44 est entouré d'une lèvre annulaire 45 renforçant l'étanchéité entre le joint annulaire 4 et le corps 2. De plus, le joint annulaire 4 comporte sur sa périphérie des lèvres annulaires intermédiaires 46 permettant d'isoler entre eux les premier, second et troisième plans radiaux R1, R2, R3. Le joint annulaire 4 comporte également deux lèvres annulaires d'extrémité 47 prévues respectivement au-delà du premier plan radial R1 et du second plan radial R2 par rapport au troisième plan radial R3 et permettant d'isoler les premier et second plans radiaux R1, R2 de l'extérieur. Les lèvres annulaires intermédiaires 46 peuvent être reliées entre elles ou avec les lèvres annulaires d'extrémité 47 par des traverses 48 (visible sur la figure 7) empêchant toute circulation fluidique annulaire, renforçant l'étanchéité du distributeur fluidique 10a et permettant de réduire le volume mort.

Le maneton 3a est bloqué axialement dans la chambre 20 par l'épaulement intérieur 25 dans un premier sens axial et par la butée angulaire et axiale 24 dans un second sens axial. Le maneton 3a comporte une nervure latérale 35 externe (visible sur la figure 1) destinée à coopérer avec le joint annulaire 4 pour renforcer le blocage en rotation du joint annulaire 4 par rapport au maneton 3a. Le maneton 3a comporte par ailleurs deux épaulements 38 de diamètre supérieur au diamètre intérieur du joint annulaire 4 pour le bloquer axialement par rapport au maneton 3a.

Le maneton 3a est pourvu d'un ergot radial 33 destiné à coopérer avec la butée angulaire et axiale 24 du corps 2 pour limiter la rotation du maneton 3a par rapport au corps 2.

Le maneton 3a est couplé à des moyens d'entraînement motorisés 12 de type standard adaptés pour faire pivoter angulairement le maneton 3a et le joint annulaire 4 par rapport au corps 2 dans des positions angulaires prédéterminées. Le couplage mécanique entre le maneton 3a et les moyens d'entraînement motorisés 12 est de type connu et prévu pour permettre un couplage et un découplage aisés.

L'élément de circuit fluidique 13 permet de raccorder entre eux les premier et second ports d'entrée/sortie 21, 22.

En référence notamment à la figure 9, l'élément de circuit fluidique 13 peut comporter une conduite fluidique 131 dont les extrémités sont raccordées aux premier et second ports d'entrée/sortie 21, 22, pourvue de premiers moyens de raccordement 136 permettant son raccordement au premier réservoir 100 et de moyens de raccordement secondaires 140 permettant son raccordement à une pompe de circulation 14 disposée entre le premier réservoir 100 et le premier port d'entrée/sortie 21. Selon une variante de réalisation non représentée, la pompe de circulation est disposée entre le premier réservoir et le second port d'entrée/sortie.

En référence à la figure 9, le corps 2 peut être prolongé latéralement de sorte que le premier port d'entrée/sortie 21 soit séparé de la chambre 20 par une portion de tube 133 pourvue de moyens de raccordement secondaires 140 permettant son raccordement à une pompe de circulation 14 et de premiers moyens de raccordement 136 prévus au niveau du premier port d'entrée/sortie 21 et permettant son raccordement au premier réservoir 100. De plus, l'élément de circuit fluidique 13 comporte une conduite fluidique 131 dont les extrémités sont raccordées aux premier et second ports d'entrée/sortie 21, 22.

La pompe de circulation 14 est de tout type adapté pour provoquer la circulation du fluide contenu entre le premier réservoir 100 et le second réservoir 200 puis du premier ou second réservoir 100, 200 vers le port d'administration 23.

Pour être utilisé, le dispositif de mélange et d'administration 1 a est pourvu d'un premier réservoir 100 contenant un premier constituant liquide et d'un second réservoir 200 contenant un second constituant, par exemple sous forme de poudre. Le premier réservoir 100 est raccordé au distributeur fluidique 10 entre les premier et second ports d'entrée-sortie 21, 22. Le second réservoir 200 est raccordé au distributeur fluidique 1 Oa entre les troisième et quatrième ports d'entrée-sortie 31, 32.

Pour réaliser la reconstitution et l'administration au moyen du distributeur fluidique 10a, on procède comme décrit ci-après.

En référence aux figures 2 et 3, on place le maneton 3a dans une première position angulaire par rapport au corps 2, position dite de transfert, dans laquelle le premier plan axial A1 du maneton 3a et le premier plan médian P1 du corps 2 sont sensiblement confondus. Ainsi la première embouchure radiale 51 a du premier canal de liaison 5a est en regard du premier port d'entrée/sortie 21, la seconde embouchure radiale 52a du premier canal de liaison 5a étant obturée par la paroi de la chambre 20. La pompe de circulation 14 est commandée pour transférer le liquide du premier réservoir 100 vers le second réservoir 200 contenant le second constituant selon les flèches S0. Le liquide contenu dans le premier réservoir 100 traverse le premier port d'entrée/sortie 21, le premier orifice de transfert 40 du joint annulaire 4, la première embouchure radiale 51 a du premier canal de liaison 5a, circule dans le premier canal de liaison 5a puis traverse l'embouchure axiale du premier canal de liaison 5a et le troisième port d'entrée/sortie 31 avant de rejoindre le second réservoir 200. Dans cette première position angulaire, la première embouchure radiale 61 a du second canal de liaison 6a et le port d'administration 23 sont obturés par la paroi de la chambre 20.

En référence aux figures 4 et 5, une fois le liquide transféré dans le second réservoir 200, on brasse la solution reconstituée de sorte à obtenir un mélange homogène. Ce brassage est réalisé en faisant circuler le mélange du second réservoir 200 vers de nouveau le second réservoir 200. Pour ce faire, on pivote le maneton 3a de 180°, de sorte à placer le maneton 3adans une seconde position angulaire par rapport au corps 2. Cette seconde position est dite de reconstitution. La seconde position angulaire est délimitée par l'ergot radial 33 du maneton 3a en contact avec la butée angulaire et axiale 24 du corps 2. Dans cette seconde position angulaire, le premier plan axial A1 du maneton 3a et le plan médian P1 du corps 2 sont sensiblement confondus mais dans une configuration axialement symétrique par rapport à la précédente. Ainsi, dans cette seconde position angulaire, la seconde embouchure radiale 52a du premier canal de liaison 5a est en regard du premier port d'entrée/sortie 21, la première embouchure radiale 51 a du premier canal de liaison 5a étant obturée par la paroi de la chambre 20. De plus, la première embouchure radiale 61a du second canal de liaison 6a est en regard du second port d'entrée/sortie 22. Dans cette seconde position angulaire, le port d'administration 23 est obturé par la paroi de la chambre 20. La pompe de circulation 14 est commandée pour transférer le liquide entre les troisième et quatrième ports d'entrée/sortie 31, 32 du maneton 3a. Cette circulation fluidique peut être réalisée selon un premier sens de circulation, illustré par les flèches S1, en traversant dans un premier temps le quatrième port d'entrée/sortie 32 puis le second canal de liaison 6a, la première embouchure radiale 61a du second canal de liaison 6a, le cinquième orifice de transfert 44 du joint annulaire 4, le second port d'entrée/sortie 22, l'élément de circulation fluidique 13, le premier port d'entrée/sortie 21, le second orifice de transfert 41 du joint annulaire 4, la seconde embouchure radiale 52a du premier canal de liaison 5a, le premier canal de liaison 5a puis le troisième port d'entrée/sortie 31. La circulation fluidique peut également être réalisée selon un second sens de circulation, illustré par les flèches S2, en traversant dans un premier temps le troisième port d'entrée/sortie 31, le premier canal de liaison 5a, la seconde embouchure radiale 52a, le second orifice de transfert 41 du joint annulaire 4, le premier port d'entrée/sortie 21, l'élément de circulation fluidique 13, le second port d'entrée/sortie 22, le cinquième orifice 44 du joint annulaire 4, la première embouchure radiale 61a du second canal de liaison 6a, le second canal de liaison 6a puis le quatrième port d'entrée/sortie 32. Cette circulation fluidique permet de brasser le mélange des premier et second constituants et d'obtenir une solution homogène.

Une fois la solution homogène obtenue, in-situ dans le réservoir 200, on pivote le maneton 3a dans la première position angulaire des figures 2 et 3, position dite de transfert, dans l'exemple illustré de 180° dans le sens antihoraire vue de dessus. La pompe de circulation 14 est commandée pour transférer la solution contenue dans le second réservoir 200 vers le premier réservoir 100 dans le sens inverse aux flèches S0 des figures 2 et 3.

En référence aux figures 6 et 7, une fois la solution contenue dans le premier réservoir 100, on peut procéder à l'administration de la solution. Pour ce faire, on pivote le maneton 3a de 90°, dans l'exemple illustré dans le sens horaire de 90 de sorte à placer le maneton 3a dans une troisième position angulaire par rapport au corps 2. Cette troisième position angulaire dite d'administration est angulairement intermédiaire entre les première et seconde positions angulaires. Dans cette troisième position le second plan axial A2 du maneton 3a et le plan médian P1 du corps 2 sont sensiblement confondus. Selon le mode de réalisation représenté, dans cette troisième position angulaire la première embouchure radiale 71a du troisième canal de liaison 7a est en regard du premier port d'entrée/sortie 21, la seconde embouchure radiale 72a du troisième canal de liaison 7a est en regard du port d'administration 23, la seconde embouchure radiale 52a du premier canal de liaison 5a et l'embouchure radiale 61a du second canal de liaison 6a sont obturées par la paroi de la chambre 20. Ainsi, le premier port d'entrée/sortie 21 est raccordé au port d'administration 23. La pompe de circulation 14 est commandée pour transférer le liquide du premier réservoir 100 vers le port d'administration 23 selon les flèches S3, par l'intermédiaire du premier port d'entrée/sortie 21, de sorte à ce que la solution puisse être injectée par l'aiguille d'injection 11. Ainsi, la solution traverse le premier port d'entrée/sortie 21, le troisième orifice de transfert 42 du joint annulaire 4, le troisième canal de liaison 7a, le quatrième orifice de transfert 43 du joint annulaire 4 puis le port d'administration 23.

Selon un autre mode de réalisation non représenté, le maneton et le joint forment une pièce monobloc. Selon encore un autre mode de réalisation non représenté, le joint est fixe par rapport au corps.

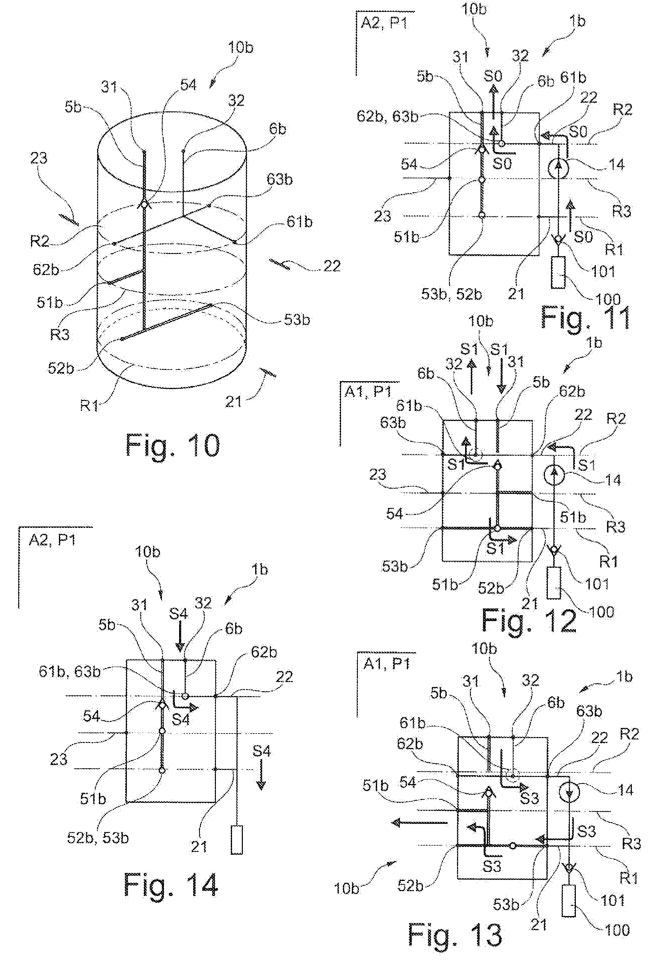

Les figures 10 à 13 illustrent un distributeur fluidique 10b selon un second mode de réalisation de l'invention comportant un corps 2 similaire au précédent et un maneton 3b décrit ci-après.

Le maneton 3b comporte des troisième et quatrième ports d'entrée/sortie 31, 32 similaires à ceux du précédent maneton 3a dont il se différencie par ses canaux de liaison 5b, 6b comportant un premier canal de liaison 5b et un second canal de liaison 6b indépendants entre eux. Pour faciliter la lecture des figures 10 à 13, le premier canal de liaison 5b est représenté avec un double trait, le second canal de liaison 6b est représenté avec un trait simple.

Le premier canal de liaison 5b présente une forme en L inversé comportant une pluralité de petites barres angulairement et axialement décalées. La tige centrale du premier canal de liaison 5b débouche axialement en un troisième port d'entrée/sortie 31. Une première petite barre du premier canal de liaison 5b débouche radialement en une première embouchure radiale 51b, une seconde barre du premier canal de liaison 5b débouche radialement en une seconde embouchure radiale 52b et une troisième barre du premier canal de liaison 5b débouche radialement en une troisième embouchure radiale 53b. Le premier canal de liaison 5b est situé dans un même premier plan axial A1 du maneton 3b. La seconde embouchure radiale 52b et la troisième embouchure radiale 53b sont réparties de part et d'autre de la tige centrale, leurs axes étant compris dans un premier plan radial R1 du maneton 3b comprenant l'axe du premier port d'entrée/sortie 21. L'axe de la première embouchure radiale 51b, est compris dans un troisième plan radial R3 du maneton 3b prévu entre le premier plan radial R1 et le troisième port d'entrée/sortie 31 et comprenant l'axe du port d'administration 23. Le premier canal de liaison 5b est en outre pourvu d'un premier clapet anti retour 54 prévu entre la jonction de la tige centrale avec la première embouchure radiale 51b et le troisième port d'entrée/sortie 31 pour empêcher toute circulation fluidique de l'un des petites barres vers le troisième port d'entrée/sortie 31.

Le second canal de liaison 6b présente une forme en T comportant une pluralité de branches radiales et dont l'extrémité de la tige centrale débouche axialement en un quatrième port d'entrée/sortie 32 axial. Une première branche radiale débouche en une première embouchure radiale 61b, une seconde branche radiale débouche en une seconde embouchure radiale 62b et une troisième branche radiale débouche en une troisième embouchure radiale 63b. Les axes des première, seconde et troisième embouchures radiales 61b, 62b, 63b sont compris dans un second plan radial R2 prévu au-delà du troisième plan radial R3 par rapport au premier plan radial R1 et comprenant l'axe du second port d'entrée/sortie 22. De plus, les axes des seconde et troisième embouchures radiales 62b, 63b sont diamétralement opposés, réparties de part et d'autre de la tige centrale et compris dans le premier plan axial A1, et l'axe de la première embouchure radiale 61 b est compris dans un second plan axial A2. Dans l'exemple illustré, le second plan axial A2 est décalé de 90 par rapport au premier plan axial A1 de sorte que le passage entre les première et seconde positions, et le passage entre les seconde et troisième positions, sont respectivement obtenus par la rotation d'un quart tour du maneton dans le corps.

En référence aux figures 11 à 14, le dispositif de mélange et d'administration 1b est sensiblement similaire au précédent. Il diffère en ce que la pompe de circulation 14 est prévue entre le premier réservoir 100 et le second port d'entrée/sortie 22. De plus le premier réservoir 100 est couplé à un second clapet anti retour 101 pour empêcher toute circulation fluidique vers le premier réservoir 100.

Pour réaliser la reconstitution et l'administration au moyen du distributeur fluidique 10b, on procède comme décrit ci-après.

En référence à la figure 11, on place le maneton 3b dans une première position angulaire par rapport au corps 2, position dite de transfert, dans laquelle le second plan axial A2 du maneton 3b et le premier plan médian P1 du corps 2 sont sensiblement confondus. Ainsi la première embouchure radiale 61b du second canal de liaison 6b est en regard du second port d'entrée/sortie 22, les seconde et troisième embouchures radiales 62b, 63b du second canal de liaison 6b étant obturées par la paroi de la chambre 20. La pompe de circulation 14 est commandée pour transférer le liquide du premier réservoir 100 vers le second réservoir (non représenté sur cette figure) contenant le second constituant selon les flèches S0. Dans cette première position angulaire, les première, seconde et troisième embouchures radiales 51b, 52b 53b du premier canal de liaison 5b et le port d'administration 23 sont obturés par la paroi de la chambre 20.

En référence à la figure 12, une fois le liquide transféré dans le second réservoir, on brasse la solution. Pour ce faire, on pivote le maneton 3b de 90°, dans l'exemple illustré dans le sens antihcraire vue de dessus, de sorte à placer le maneton 3b dans une seconde position angulaire dite de reconstitution par rapport au corps 2. Dans cette seconde position angulaire, le premier plan axial A1 du maneton 3b et le plan médian P1 du corps 2 sont sensiblement confondus, la seconde embouchure radiale 52b du premier canal de liaison 5b est en regard du premier port d'entrée/sortie 21, les première et troisième embouchures radiales 51b, 53b du premier canal de liaison 5b étant obturées par la paroi de la chambre 20. De plus, la seconde embouchure radiale 62b du second canal de liaison 6b est en regard du second port d'entrée/sortie 22, les première et troisième embouchures radiales 61b, 63b du second canal de liaison 6b et le port d'administration 23 sont obturés par la paroi de la chambre 20. La pompe de circulation 14 est commandée pour transférer le liquide entre les quatrième et troisième ports d'entrée/sortie 32, 31 du maneton 3b. Cette circulation fluidique est réalisée selon le premier sens de circulation, illustré par les flèches S1. De manière optionnelle, pendant ce transfert, le second clapet anti retour 101 empêche tout retour fluidique vers le premier réservoir 100.

Une fois la solution homogène obtenue, in-situ dans le réservoir 200 on peut l'administrer. En référence à la figure 13, on pivote le maneton 3b de 180°, de sorte à placer le maneton 3b dans une troisième position angulaire dite d'administration par rapport au corps 2. Cette troisième position angulaire est sensiblement symétrique axialement à la première position angulaire. Dans cette troisième position angulaire, le premier plan axial A1 du maneton 3b et le plan médian P1 du corps 2 sont sensiblement confondus, la troisième embouchure radiale 53b du premier canal de liaison 5b est en regard du premier port d'entrée/sortie 21, la première embouchure radiale 51 b du premier canal de liaison 5b est en regard du port d'administration 23 et la deuxième embouchure radiale 52b du premier canal de liaison 5b est obturée par la paroi de la chambre 20. De plus, la troisième embouchure radiale 63b du second canal de liaison 6b est en regard du second port d'entrée/sortie 22, les première et seconde embouchures radiales 61b, 62b du second canal de liaison 6b sont obturées par la paroi de la chambre 20. La pompe de circulation 14 est commandée pour transférer le liquide du second réservoir vers le port d'administration 23 tel qu'illustré par les flèches S3. Pendant l'administration, le premier clapet anti retour 54 empêche tout retour fluidique vers le second réservoir par le second canal 5b. L'administration est ainsi réalisée du second réservoir.

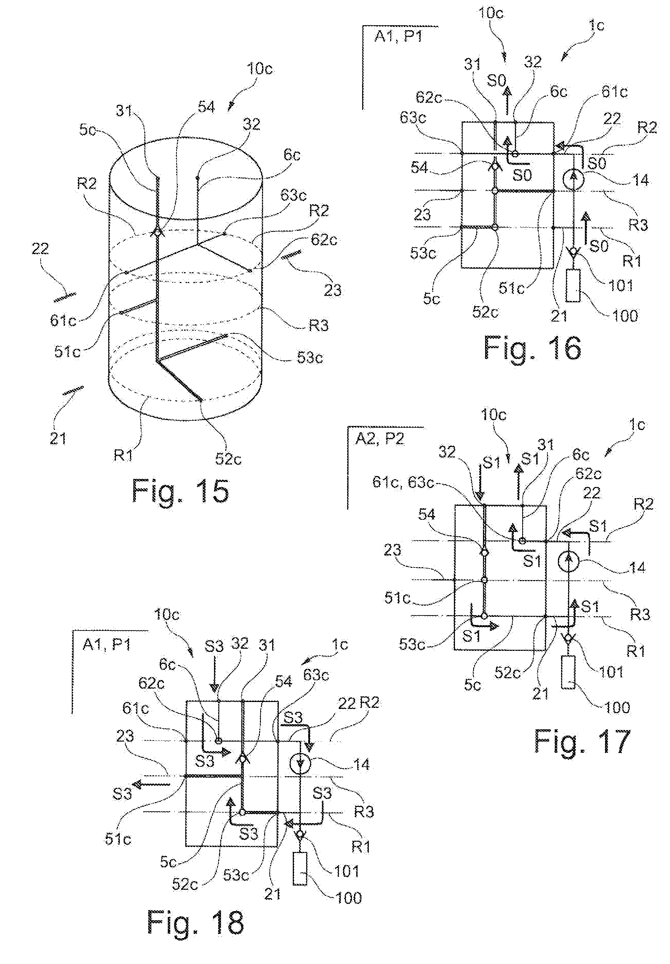

Selon une variante de réalisation illustrée par la figure 14, pour administrer la solution du premier réservoir 100, avant l'administration, on transfère la solution du second réservoir vers le premier réservoir. Pour ce faire, on pivote le maneton 3b de la seconde position dans la première position angulaire de la figure 12 en pivotant le maneton 3b de 90°, dans l'exemple illustré dans le sens horaire vue de dessus. La pompe de circulation 14 est commandée pour transférer la solution contenue dans le second réservoir vers le premier réservoir 100 dans le sens de circulation illustré par les flèches S4 inverses aux flèches S0 de la figure 12. Pour réaliser un tel mode de fonctionnement, le dispositif de mélange et d'administration 1 b ne comporte pas de second clapet anti retour 101. Ensuite pour passer de cette position à la troisième position décrite précédemment, on pivotera le maneton 3b de 90°, dans l'exemple illustré dans le sens horaire vue de dessus et on procédera à l'administration de la solution contenu dans le premier réservoir 100.

Les figures 15 à 18 illustrent un distributeur fluidique 10c selon un troisième mode de réalisation de l'invention comportant un corps 2 similaire au précédent et un maneton 3c décrit ci-après.

Le maneton 3c comporte des troisième et quatrième ports d'entrée/sortie 31, 32 similaires à ceux des précédents manetons 3a, 3b dont il se différencie par ses canaux de liaison 5c, 6c comportant un premier canal de liaison 5c et un second canal de liaison 6c indépendants entre eux. Pour faciliter la lecture des figures 15 à 18, le premier canal de liaison 5c est représenté avec un double trait, le second canal de liaison 6c est représenté avec un trait simple.

Le premier canal de liaison 5c présente une forme en L inversé comportant une pluralité de petites barres angulairement et axialement décalées. La tige centrale du premier canal de liaison 5c débouche axialement en un troisième port d'entrée/sortie 31. Une première petite barre du premier canal de liaison 5c débouche radialement en une première embouchure radiale 51c, une seconde barre du premier canal de liaison 5c débouche radialement en une seconde embouchure radiale 52c et une troisième barre du premier canal de liaison 5c débouche radialement en une troisième embouchure radiale 53c. Le premier canal de liaison 5c est situé dans un même premier plan axial A1 du maneton 3c.

Les axes des seconde et troisième embouchures radiales 52c, 53c sont compris dans un premier plan radial R1 du maneton 3c comprenant l'axe du premier port d'entrée/sortie 21. Les axes des seconde et troisième embouchures radiales 52c, 53c sont par ailleurs angulairement décalés entre eux, dans l'exemple illustré, elles sont décalées de 90°. L'axe de la première embouchure radiale 51c du maneton 3c est compris dans un troisième plan radial R3 du maneton 3c comprenant l'axe du port d'administration 23 et situé entre le premier plan radial R1 et le troisième port d'entrée/sortie 31. Les axes des première et troisième embouchures radiales 51c, 53c sont compris dans un premier plan axial A1 du maneton 3c. Le premier canal de liaison 5c est en outre pourvu d'un premier clapet anti retour 54 prévu entre la jonction de la tige centrale avec la première embouchure radiale 51c et le troisième port d'entrée/sortie 31 pour empêcher toute circulation fluidique de l'un des petites barres vers le troisième port d'entrée/sortie 31.

Le second canal de liaison 6c présente une forme en T comportant une pluralité de branches radiales et dont l'extrémité de la tige centrale débouche axialement en un quatrième port d'entrée/sortie 32 axial. Une première branche radiale débouche en une première embouchure radiale 61c, une seconde branche radiale débouche en une seconde embouchure radiale 62c et une troisième branche radiale débouche en une troisième embouchure radiale 63c. Les axes des première, seconde et troisième embouchures radiales 61c, 62c, 63c. sont compris dans un second plan radial R2 prévu au-delà du troisième plan radial R3 par rapport au premier plan radial R1 et comprenant l'axe du second port d'entrée/sortie 22. De plus, les axes des première et troisième embouchures radiales 61c, 63c sont diamétralement opposés, réparties de part et d'autre de la tige centrale et compris dans le premier plan axial A1, et l'axe de la seconde embouchure radiale 62c est compris dans un second plan axial A2. Dans l'exemple illustré, le second plan axial A2 est décalé de 90° par rapport au premier plan axial A1 de sorte que le passage entre les première et seconde positions, et le passage entre les seconde et troisième positions, sont respectivement obtenus par la rotation d'un quart de tour du maneton dans le corps.

En référence aux figures 16 à 18, le dispositif de mélange et d'administration 1c est sensiblement similaire au précédent. Il s'en différencie par la configuration des premier et second canaux de liaison 5c, 6c.

Pour réaliser la reconstitution et l'administration au moyen du distributeur fluidique 10c, on procède comme décrit ci-après.

En référence à la figure 16, on place le maneton 3c dans une première position angulaire par rapport au corps 2, position dite de transfert, dans laquelle le second plan axial A1 du maneton 3c et le premier plan médian P1 du corps 2 sont sensiblement confondus. Ainsi la première embouchure radiale 61c du second canal de liaison 6c est en regard du second port d'entrée/sortie 22, les seconde et troisième embouchures radiales 62c, 63c du second canal de liaison 6c étant obturées par la paroi de la chambre 20. La pompe de circulation 14 est commandée pour transférer le liquide du premier réservoir 100 vers le second réservoir (non représenté sur cette figure) contenant le second constituant selon les flèches S0. Dans cette première position angulaire, les première, seconde et troisième embouchures radiales 51c, 52c, 53c du premier canal de liaison 5c et le port d'administration 23 sont obturés par la paroi de la chambre 20.

En référence à la figure 17, une fois le liquide transféré dans le second réservoir, on brasse la solution. Pour ce faire, on pivote le maneton 3c de 90°, dans l'exemple illustré dans le sens horaire vue de dessus, de sorte à placer le maneton 3c dans une seconde position angulaire dite de reconstitution par rapport au corps 2. Dans cette seconde position angulaire, le second plan axial A2 du maneton 3c et le plan médian P1 du corps 2 sont sensiblement confondus, la seconde embouchure radiale 52c du premier canal de liaison 5c est en regard du premier port d'entrée/sortie 21, les première et troisième embouchures radiales 51c, 53c du premier canal de liaison 5c étant obturées par la paroi de la chambre 20. De plus, la seconde embouchure radiale 62c du second canal de liaison 6c est en regard du second port d'entrée/sortie 22, les première et troisième embouchures radiales 61c, 63c du second canal de liaison 6c et le port d'administration 23 sont obturés par la paroi de la chambre 20. La pompe de circulation 14 est commandée pour transférer le liquide entre les troisième et quatrième ports d'entrée/sortie 31, 32 du maneton 3b. Cette circulation fluidique est réalisée selon le premier sens de circulation, illustré par les flèches S1. De manière optionnelle, pendant ce transfert, le second clapet anti retour 101 empêche tout retour fluidique vers le premier réservoir 100.

Une fois la solution homogène obtenue, in-situ dans le réservoir 200 on peut l'administrer. En référence à la figure 18, on pivote le maneton 3c de 90°, dans l'exemple illustré dans le sens horaire vue de dessus, de sorte à placer le maneton 3c dans une troisième position angulaire dite d'administration par rapport au corps 2. Cette troisième position angulaire est sensiblement symétrique axialement à la première position angulaire. Dans cette troisième position angulaire, le premier plan axial A1 du maneton 3c et le plan médian P1 du corps 2 sont sensiblement confondus, la troisième embouchure radiale 53c du premier canal de liaison 5c est en regard du premier port d'entrée/sortie 21, la première embouchure radiale 51c du premier canal de liaison 5b est en regard du port d'administration 23 et la seconde embouchure radiale 52c du premier canal de liaison 5c est obturée par la paroi de la chambre 20. De plus, la troisième embouchure radiale 63c du second canal de liaison 6c est en regard du second port d'entrée/sortie 22, les première et seconde embouchures radiales 61c, 62c du second canal de liaison 6c sont obturés par la paroi de la chambre 20. La pompe de circulation 14 est commandée pour transférer le liquide du second réservoir vers le port d'administration 23 tel qu'illustré par les flèches S3. Pendant l'administration, le premier clapet anti retour 54 empêche tout retour fluidique vers le second réservoir par le second canal 5c. L'administration est ainsi réalisée du second réservoir.

Comme il ressort de la description, le dispositif de mélange et d'administration 1a ; 1b ; 1c selon l'invention comporte ainsi une partie jetable et une partie réutilisable. En effet, les moyens d'entraînement motorisés 12 peuvent facilement être découplés du maneton 3 pour être utilisé avec un autre distributeur fluidique 10a ; 10b ; 10c.

L'invention permet d'atteindre les objectifs précédemment mentionnés. En effet, l'utilisation du distributeur fluidique et du dispositif de mélange et d'administration est simple. Les chemins fluidiques externes et internes du distributeur fluidique sont simplifiés.

Il va de soi que la présente invention ne saurait être limitée à la description qui précède d'un de ses modes de réalisation, susceptibles de subir quelques modifications sans pour autant sortir du cadre de l'invention. Il est par exemple possible de multiplier le nombre d'étages du distributeur fluidique et de prévoir des canaux de liaison additionnels pour par exemple raccorder des réservoirs supplémentaires.

## Revendications

1. Distributeur fluidique (10a ; 10b ; 10c) adapté pour la reconstitution in-situ d'une solution par mélange de deux constituants provenant d'un premier réservoir (100) et d'un second réservoir (200), ledit distributeur fluidique (10a ; 10b ; 10c) comprenant un corps (2) définissant une chambre (20) axiale et comportant des premier et second ports d'entrée/sortie (21, 22) radiaux destinés à être raccordés audit premier réservoir (100) et à une pompe de circulation (14), et un port d'administration (23) radial adapté pour la sortie de ladite solution, lesdits premier et second ports d'entrée/sortie (21, 22) et ledit port d'administration (23) communiquant avec ladite chambre (20), un maneton (3a ; 3b ; 3c) rotatif logé dans ladite chambre (20) et traversé par des canaux de liaison (5a, 6a, 7a ; 5b, 6b ; 5c, 6c), ledit maneton (3a ; 3b ; 3c) comportant des troisième et quatrième ports d'entrée/sortie (31, 32) axiaux destinés à être raccordés audit second réservoir (200) et communiquant avec lesdits canaux de liaison (5a, 6a ; 5b, 6b ; 5c, 6c), lesdits canaux de liaison (5a, 6a, 7a; 5b, 6b ; 5c, 6c) étant agencés pour raccorder fluidiquement et sélectivement lesdits premier, second, troisième et quatrième ports d'entrée/sortie (21, 22, 31,32) et ledit port d'administration (23) selon la position angulaire dudit maneton (3a ; 3b ; 3c) par rapport audit corps (2) de sorte à dans une première position angulaire, raccorder ledit premier port d'entrée/sortie (21) audit troisième port d'entrée/sortie (31) et obturer ledit second port d'entrée/sortie (22) et ledit quatrième port d'entrée/sortie (32) pour permettre, au moyen de ladite pompe de circulation (14), le transfert du constituant entre ledit premier réservoir (100) et ledit second réservoir (200), **caractérisé en ce que** lesdits canaux de liaison (5a, 6a, 7a ; 5b, 6b ; 5c, 6c) sont agencés pour :
- dans une seconde position angulaire, raccorder ledit premier port d'entrée/sortie (21) audit troisième port d'entrée/sortie (31) et ledit second port d'entrée/sortie (22) audit quatrième port d'entrée/sortie (32) pour permettre, au moyen de ladite pompe de circulation (14), le transfert et le brassage du mélange entre lesdits premier et second réservoirs (100, 200),
- dans une troisième position angulaire, raccorder ledit premier port d'entrée/sortie (21) audit port d'administration (23) et obturer ledit second port d'entrée/sortie (22), ledit troisième port d'entrée/sortie (31) et ledit quatrième port d'entrée/sortie (32) pour permettre, au moyen de ladite pompe de circulation (14), l'administration de ladite solution obtenue.

2. Distributeur fluidique (10a) selon la revendication 1, **caractérisé en ce que** lesdits canaux de liaison (5a, 6a, 7a) comportent les trois canaux de liaison suivants :
- un premier canal de liaison (5a) en T inversé dont la branche centrale est pourvue dudit troisième port d'entrée/sortie (31), dont une première branche radiale est pourvue d'une première embouchure radiale (51a) et dont une seconde branche radiale est pourvue d'une seconde embouchure radiale (52a), ledit premier canal de liaison (5a) étant agencé de sorte que :
o dans ladite première position angulaire, ladite première embouchure radiale (51a) est située en regard dudit premier port d'entrée/sortie (21) et ladite seconde embouchure radiale (52a) est obturée par la paroi de ladite chambre (20),
o dans ladite seconde position angulaire, ladite seconde embouchure radiale (52a) est située en regard dudit premier port d'entrée/sortie (21) et ladite première embouchure radiale (51a) est obturée par la paroi de ladite chambre (20),
o dans ladite troisième position angulaire, lesdites première et seconde embouchures radiales (51a, 52a) sont obturées par la paroi de ladite chambre (20),
- un second canal de liaison (6a) en L inversé dont la grande barre est pourvue dudit quatrième port d'entrée/sortie (32) et dont la petite barre est pourvue d'une première embouchure radiale (61a), ledit second canal de liaison (6a) étant agencé de sorte que :
o dans lesdites première et troisième positions angulaires, ladite première embouchure radiale (61a) est obturée par la paroi de ladite chambre (20),
o dans ladite seconde position angulaire, ladite première embouchure radiale (61a) est située en regard dudit second port d'entrée/sortie (22),
- un troisième canal de liaison (7a) traversant radialement ledit maneton (3a) et pourvu d'une première embouchure radiale (71a) et d'une seconde embouchure radiale (72a), ledit troisième canal de liaison (7a) étant agencé de sorte que :
o dans lesdites première et seconde positions angulaires, lesdites première et seconde embouchures radiales (71a, 72a) sont obturées par la paroi de ladite chambre (20),
o dans ladite troisième position angulaire, ladite première embouchure radiale (71a) est située en regard dudit premier port d'entrée/sortie (21) et ladite seconde embouchure radiale (72a) est située en regard dudit port d'administration (23).

3. Distributeur fluidique (10a) selon la revendication 2, **caractérisé en ce que** :
- les axes desdites première et seconde embouchures radiales (51a, 52a) dudit premier canal de liaison (5a), de ladite première embouchure radiale (71a) dudit troisième canal de liaison (7a) et ledit premier port d'entrée/sortie (21) sont compris dans un premier plan radial (R1),
- les axes de ladite première embouchure radiale (61a) dudit second canal de liaison (6a) et ledit second port d'entrée/sortie (22) sont compris dans un second plan radial (R2) distinct dudit premier plan radial (R1),
- l'axe de ladite seconde embouchure radiale (72a) dudit troisième canal de liaison (7a) et ledit port d'administration (23) sont compris dans un troisième plan radial (R3) distinct desdits premier et second plans radiaux (R1, R2).

4. Distributeur fluidique (10a) selon la revendication 3, **caractérisé en ce que** :
- ledit premier d'entrée/sortie (21), ledit second port d'entrée/sortie (22) et ledit port d'administration (23) sont situés dans un même plan médian (P1) dudit corps (2), lesdits premier et second canaux de liaison (5a, 6a) sont situés dans un même premier plan axial (A1) dudit maneton (3a),
- ledit troisième canal de liaison (7a) est situé dans un second plan axial (A2) dudit maneton (3a) angulairement décalé de 90° par rapport audit premier plan axial (A1),
de sorte que le passage entre lesdites première et seconde positions angulaires est obtenu par la rotation d'un demi-tour dudit maneton (3a) dans ledit corps (2) et que, le passage entre lesdites première et troisième positions et le passage entre lesdites seconde et troisième positions sont respectivement obtenus par la rotation d'un quart de tour dudit maneton (3a) dans ledit corps (2).

5. Distributeur fluidique (10b ; 10c) selon la revendication 1, **caractérisé en ce que** lesdits canaux de liaison (5b, 6b; 5c, 6c) comportent les deux canaux de liaison suivants :
- un premier canal de liaison (5b ; 5c) en L inversé comportant une pluralité de petites barres, dont la grande barre est pourvue dudit troisième port d'entrée/sortie (31), dont une première petite barre est pourvue d'une première embouchure radiale (51b ; 51c), dont d'une seconde petite barre est pourvue d'une seconde embouchure radiale (52b ; 52c), dont d'une troisième petite barre est pourvue d'une troisième embouchure radiale (53b ; 53c), ledit premier canal de liaison (5b ; 5c) étant agencé de sorte que :
o dans ladite première position angulaire, lesdites première, seconde et troisième embouchures radiales (51b, 52b, 53b ; 51c, 52c, 53c) sont obturées par la paroi de ladite chambre (20),
o dans ladite seconde position angulaire, ladite seconde embouchure radiale (52b ; 52c) est située en regard dudit premier port d'entrée/sortie (21) et lesdites première et troisième embouchures radiales (51b, 53b ; 51c, 53c) sont obturées par la paroi de ladite chambre (20),
o dans ladite troisième position angulaire, ladite troisième embouchure radiale (53b ; 53c) est située en regard dudit premier port d'entrée/sortie (21), ladite première embouchure radiale (51b ; 51c) est située en regard dudit port d'administration (23), ladite seconde embouchure radiale (52b ; 52c) est obturée par la paroi de ladite chambre (20),
- un second canal de liaison (6b ; 6c) en T inversé comportant une pluralité de branches radiales, dont la branche centrale est pourvue dudit quatrième port d'entrée/sortie (32), dont une première branche radiale est pourvue d'une première embouchure radiale (61 b ; 61c), dont d'une seconde branche radiale est pourvue d'une seconde embouchure radiale (62b ; 62c), dont d'une troisième branche radiale est pourvue d'une troisième embouchure radiale (63b ; 63c), ledit second canal de liaison (6b ; 6c) étant agencé de sorte que :
o dans ladite première position angulaire, ladite première embouchure radiale (61a) est située en regard dudit second port d'entrée/sortie (22) et lesdites seconde et troisième embouchures radiales (62b ; 62c ; 63b ; 63c) sont obturées par la paroi de ladite chambre (20),
o dans ladite seconde position angulaire, ladite seconde embouchure radiale (62a) est située en regard dudit second port d'entrée/sortie (22) et lesdites première et troisième embouchures radiales (61b ; 61c ; 63b ; 63c) sont obturées par la paroi de ladite chambre (20),
o dans ladite troisième position angulaire, ladite troisième embouchure radiale (63a) est située en regard dudit second port d'entrée/sortie (22) et lesdites seconde et troisième embouchures radiales (62b ; 62c; 63b ; 63c) sont obturées par la paroi de ladite chambre (20).

6. Distributeur fluidique (10b) selon la revendication 5, **caractérisé en ce que** :
- les axes desdites seconde et troisième embouchures radiales (52b; 53b) dudit premier canal de liaison (5b) et ledit premier port d'entrée/sortie (21) sont compris dans un premier plan radial (R1),
- les axes desdites première, seconde et troisième embouchures radiales (61b, 62b, 63b) dudit second canal de liaison (6b) et ledit second port d'entrée/sortie (22) sont compris dans un second plan radial (R2),
- l'axe de ladite première embouchure radiale (51b) dudit premier canal de liaison (5b) et ledit port d'administration (23) sont compris dans un troisième plan radial (R3) distinct desdits premier et second plans radiaux (R1, R2).

7. Distributeur fluidique (10b) selon les revendications 5 et 6, **caractérisé en ce que** :
- lesdits premier, second ports d'entrée/sortie (21, 22) et ledit port d'administration (23) sont sensiblement situés dans un même plan médian (P1) dudit corps (2), ledit premier canal de liaison (5b) est situé dans un premier plan axial (A1) dudit maneton (3b) de sorte que le passage entre lesdites première et seconde positions angulaires est obtenu par la rotation d'un demi tour dudit maneton (3b) dans ledit corps (2),
- lesdites première et troisième embouchures radiales (61b ; 61c ; 63b ; 63c) dudit second canal de liaison (6b ; 6c) sont situées dans un second plan axial (A2) dudit maneton (3a) et ladite seconde embouchure radiale (62a) est située dans un troisième plan axial (A3) dudit maneton (3a) angulairement décalé d'environ 90° par rapport audit second plan axial (A2) de sorte que le passage entre lesdites première et troisième positions et le passage entre lesdites seconde et troisième positions sont obtenus par la rotation d'un quart de tour dudit maneton (3) dans ledit corps (2).

8. Distributeur fluidique (10c) selon la revendication 5, **caractérisé en ce que** :
- les axes desdites première et troisième embouchures radiales (51c; 53c) dudit premier canal de liaison (5c) et ledit premier port d'entrée/sortie (21) sont compris dans un premier plan radial (R1),
- les axes desdites première, seconde et troisième embouchures radiales (61c, 62c, 63c) dudit second canal de liaison (6c) et ledit second port d'entrée/sortie (22) sont compris dans un second plan radial (R2),
- l'axe de ladite seconde embouchure radiale (52c) dudit premier canal de liaison (5c) et ledit port d'administration (23) sont compris dans un troisième plan radial (R3) distinct desdits premier et second plans radiaux (R1, R2).

9. Distributeur fluidique (10a ; 10b ; 10c) selon l'une quelconque des revendications 2 et 5, **caractérisé en ce qu'**il comporte un joint annulaire (4) prévu entre ledit maneton (3a ; 3b ; 3c) et ledit corps (2), ledit joint annulaire (4) comportant une partie pleine traversée par des orifices (40-44) destinés à être en regard desdits première embouchure radiale (51a ; 51b ; 51c), seconde embouchure radiale (52a ; 52b ; 52c), troisième embouchure radiale (53b ; 53c) dudit premier canal de liaison (5a ; 5b ; 5c), desdites première embouchure radiale (61a ; 61b ; 61c), seconde embouchure radiale (62b ; 62c), troisième embouchure radiale (63b ; 63c) dudit second canal de liaison (6a ; 6b ; 6c), et desdites première embouchure radiale (71a) et seconde embouchure radiale (72a) dudit troisième canal de liaison (7a), ladite partie pleine étant agencée pour assurer l'étanchéité sélective entre lesdits canaux de liaison (5a, 6a, 7a ; 5b, 6b ; 5c, 6c).

10. Dispositif de reconstitution in situ et d'administration (1a ; 1b ; 1c), d'une solution obtenue par mélange de deux constituants provenant d'un premier et d'un second réservoir (100, 200), ledit dispositif de reconstitution in situ et d'administration (1a ; 1b ; 1c) comprenant un distributeur fluidique (10) comportant un corps (2) et un maneton (3a ; 3b ; 3c) mobile en rotation dans ledit corps (2), des moyens d'entraînement motorisés (12) dudit maneton (3a ; 3b ; 3c), un élément de circuit fluidique (13) agencé pour raccorder lesdits premier et second ports d'entrée/sortie (21, 22), **caractérisé en ce qu'**il comprend un distributeur fluidique (10a ; 10b ; 10c) selon l'une quelconque des revendications précédentes, des moyens d'entraînement motorisés (12) dudit maneton (3a ; 3b ; 3c), un élément de circuit fluidique (13) agencé pour raccorder lesdits premier et second ports d'entrée/sortie (21, 22) et ledit premier réservoir (100), une pompe de circulation (14) raccordée audit élément de circuit fluidique (13).

## Patentansprüche

1. Fluidverteiler (10a; 10b; 10c), der zur In-situ-Regeneration einer Lösung durch Mischen von zwei Bestandteilen, die aus einem ersten Behälter (100) und einem zweiten Behälter (200) stammen, geeignet ist, wobei der Fluidverteiler (10a; 10b; 10c) einen Körper (2) aufweist, der eine axiale Kammer (20) definiert und erste und zweite radiale Eingangs-/Ausgangsstellen (21, 22), die dazu bestimmt sind, mit dem ersten Behälter (100) und einer Umwälzpumpe (14) verbunden zu werden, und eine radiale Verabreichungsstelle (23) aufweist, die für das Auslassen der Lösung geeignet ist, wobei die erste und zweite Eingangs-/ Ausgangsstelle (21, 22) und die Verabreichungsstelle (23) mit der Kammer (20) in Verbindung stehen, und einen drehbaren Zapfen (3a; 3b; 3c) aufweiset, der in der Kammer (20) angeordnet ist und durch Verbindungskanäle (5a, 6a, 7a; 5b, 6b; 5c, 6c) durchquert wird, wobei der drehbare Zapfen (3a; 3b; 3c) dritte und vierte axiale Eingangs-/Ausgangsstellen (31, 32) aufweist, die dazu bestimmt sind, mit dem zweiten Behälter (200) verbunden zu werden und mit den Verbindungskanälen (5a, 6a; 5b, 6b; 5c, 6c) in Verbindung stehen, wobei die Verbindungskanäle (5a, 6a, 7a; 5b, 6b; 5c, 6c) angeordnet sind, um in Fluidverbindung und selektiv die ersten, zweiten, dritten und vierten Eingangs-/Ausgangsstellen (21, 22, 31, 32) und die Verabreichungsstelle (23) entsprechend der Winkelposition des drehbaren Zapfens (3a; 3b; 3c) gegenüber dem Körper (2) derart zu verbinden, um in einer ersten Winkelposition die erste Eingangs-/Ausgangsstelle (21) mit der dritten Eingangs-/Ausgangsstelle (31) zu verbinden und die zweite Eingangs-/Ausgangsstelle (22) und die vierte Eingangs-/Ausgangsstelle (32) zu verschließen, um mittels der Umwälzpumpe (14) das Übertragen des Bestandteils zwischen dem ersten Behälter (100) und dem zweiten Behälter (200) zu ermöglichen, **dadurch gekennzeichnet, dass** die Verbindungskanäle (5a, 6a, 7a; 5b, 6b; 5c, 6c) angeordnet sind, um:
- in einer zweiten Winkelposition die erste Eingangs-/Ausgangsstelle (21) mit der dritten Eingangs-/Ausgangsstelle (31) und die zweite Eingangs-/Ausgangsstelle (22) mit der vierten Eingangs-/Ausgangsstelle (32) zu verbinden, um mittels der Umwälzpumpe (14) das Übertragen und das Vermischen der Mischung zwischen dem ersten und zweiten Behälter (100, 200) zu ermöglichen,
- in einer dritten Winkelposition die erste Eingangs-/Ausgangsstelle (21) mit der Verabreichungsstelle (23) zu verbinden und die zweite Eingangs-/Ausgangsstelle (22), die dritte Eingangs-/Ausgangsstelle (31) und die vierte Eingangs-/Ausgangsstelle (32) zu verschließen, um mittels der Umwälzpumpe (14) das Verabreichen der erhaltenen Lösung zu ermöglichen.

2. Fluidverteiler (10a) nach Anspruch 1, **dadurch gekennzeichnet, dass** die Verbindungskanäle (5a, 6a, 7a) die drei folgenden Verbindungskanäle aufweisen:
- einen ersten Verbindungskanal (5a) in Form eines umgekehrten T, dessen zentraler Arm mit der dritten Eingangs-/Ausgangsstelle (31) versehen ist, wovon ein erster radialer Arm mit einer ersten radialen Öffnung (51a) versehen ist und wovon ein zweiter radialer Arm mit einer zweiten radialen Öffnung (52a) versehen ist, wobei der erste Verbindungskanal (5a) derart angeordnet ist, dass:
∘ die erste radiale Öffnung (51a) in der ersten Winkelposition gegenüber von der ersten Eingangs-/Ausgangsstelle (21) angeordnet ist und die zweite radiale Öffnung (52a) durch die Wand der Kammer (20) verschlossen ist,
∘ die zweite radiale Öffnung (52a) in der zweiten Winkelposition gegenüber von der ersten Eingangs-/Ausgangsstelle (21) angeordnet ist und die erste radiale Öffnung (51a) durch die Wand der Kammer (20) verschlossen ist,
∘ die ersten und zweiten radialen Öffnungen (51a, 52a) in der dritten Winkelposition durch die Wand der Kammer (20) verschlossen sind,
- einen zweiten Verbindungskanal (6a) in Form eines umgekehrten L, dessen großer Balken mit einer vierten Eingangs-/Ausgangsstelle (32) versehen ist und dessen kleiner Balken mit einer ersten radialen Öffnung (61a) versehen ist, wobei der zweite Verbindungskanal (6a) derart angeordnet ist, dass:
∘ die erste radiale Öffnung (61a) in den ersten und dritten Winkelpositionen durch die Wand der Kammer (20) verschlossen ist,
∘ die erste radiale Öffnung (61a) in der zweiten Winkelposition gegenüber von der zweiten Eingangs-/Ausgangsstelle (22) angeordnet ist,
- einen dritten Verbindungskanal (7a), der den Zapfen (3a) radial durchquert und mit einer ersten radialen Öffnung (71a) und mit einer zweiten radialen Öffnung (72a) versehen ist, wobei der dritte Verbindungskanal (7a) derart angeordnet ist, dass:
∘ die ersten und zweiten radialen Öffnungen (71a, 72a) in den ersten und zweiten Winkelpositionen durch die Wand der Kammer (20) verschlossen sind,
∘ die erste radiale Öffnung (71a) in der dritten Winkelposition gegenüber von der ersten Eingangs-/Ausgangsstelle (21) angeordnet ist und die zweite radiale Öffnung (72a) gegenüber von der Verabreichungsstelle (23) angeordnet ist.

3. Fluidverteiler (10a) nach Anspruch 2, **dadurch gekennzeichnet, dass**:
- die Achsen der ersten und zweiten radialen Öffnungen (51a, 52a) des ersten Verbindungskanals (5a), der ersten radialen Öffnung (71a) des dritten Verbindungskanals (7a) und die erste Eingangs-/Ausgangsstelle (21) in einer ersten radialen Ebene (R1) enthalten sind,
- die Achsen der ersten radialen Öffnung (61a) des zweiten Verbindungskanals (6a) und die zweite Eingangs-/Ausgangsstelle (22) in einer zweiten radialen Ebene (R2) enthalten sind, die von der ersten radialen Ebene (R1) verschieden ist,
- die Achse der zweiten radialen Öffnung (72a) des dritten Verbindungskanals (7a) und die Verabreichungsstelle (23) in einer dritten radialen Ebene (R3) enthalten sind, die von den ersten und zweiten radialen Ebenen (R1, R2) verschieden ist.

4. Fluidverteiler (10a) nach Anspruch 3, **dadurch gekennzeichnet, dass**:
- die erste Eingangs-/Ausgangsstelle (21), die zweite Eingangs-/Ausgangsstelle (22) und die Verabreichungsstelle (23) in einer gleichen Mittelebene (P1) des Körpers (2) angeordnet sind, wobei die ersten und zweiten Verbindungskanäle (5a, 6a) in einer gleichen ersten axialen Ebene (A1) des Zapfens (3a) angeordnet sind,
- der dritte Verbindungskanal (7a) in einer zweiten axialen Ebene (A2) des Zapfens (3a) angeordnet ist, die winkelmäßig um 90° gegenüber der ersten axialen Ebene (A1) derart versetzt ist,
dass der Durchgang zwischen den ersten und zweiten Winkelpositionen durch die Drehung des Zapfens (3a) in dem Körper (2) um eine halbe Umdrehung erhalten ist und dass der Durchgang zwischen den ersten und dritten Positionen und der Durchgang zwischen den zweiten und dritten Positionen jeweils durch Drehung des Zapfens (3a) in dem Körper (2) um eine Viertelumdrehung erhalten ist.

5. Fluidverteiler (10b; 10c) nach Anspruch 1, **dadurch gekennzeichnet, dass** die Verbindungskanäle (5b, 6b; 5c, 6c) die zwei folgenden Verbindungskanäle aufweisen:
- einen ersten Verbindungskanal (5b; 5c) in Form eines umgekehrten L, der mehrere kleine Balken aufweist, wovon der große Balken mit der dritten Eingangs-/Ausgangsstelle (31) versehen ist, wovon ein erster kleiner Balken mit einer ersten radialen Öffnung (51b; 51c) versehen ist, wovon ein zweiter kleiner Balken mit einer zweiten radialen Öffnung (52b; 52c) versehen ist, wovon ein dritter kleiner Balken mit einer dritten radialen Öffnung (53b; 53c) versehen ist, wobei der erste Verbindungskanal (5b; 5c) derart angeordnet ist, dass:
∘ die ersten, zweiten und dritten radialen Öffnungen (51b, 52b, 53b; 51c, 52c, 53c) in der ersten Winkelposition durch die Wand der Kammer (20) verschlossen sind,
∘ die zweite radiale Öffnung (52b; 52c) in der zweiten Winkelposition gegenüber von der ersten Eingangs-/Ausgangsstelle (21) angeordnet ist und die ersten und dritten radialen Öffnungen (51b, 53b; 51c, 53c) durch die Wand der Kammer (20) verschlossen sind,
∘ die dritte radiale Öffnung (53b; 53c) in der dritten Winkelposition gegenüber von der ersten Eingangs-/Ausgangsstelle (21) angeordnet ist, die erste radiale Öffnung (51b; 51c) gegenüber von der Verabreichungsstelle angeordnet ist, die zweite radiale Öffnung (52b; 52c) durch die Wand der Kammer (20) verschlossen ist,
- einen zweiten Verbindungskanal (6b; 6c) in Form eines umgekehrten T, der mehrere radiale Arme aufweist, wovon der zentrale Arm mit der vierten Eingangs-/Ausgangsstelle (32) versehen ist, wovon ein erster radialer Arm mit einer ersten radialen Öffnung (61b; 61c) versehen ist, wovon ein zweiter radialer Arm mit einer zweiten radialen Öffnung (62b; 62c) versehen ist, wovon ein dritter radialer Arm mit einer dritten radialen Öffnung (63b; 63c) versehen ist, wobei der zweite Verbindungskanal (6b; 6c) derart angeordnet ist, dass:
∘ die erste radiale Öffnung (61a) in der ersten Winkelposition gegenüber von der zweiten Eingangs-/Ausgangsstelle (22) angeordnet ist und die zweiten und dritten radialen Öffnungen (62b; 62c; 63b; 63c) durch die Wand der Kammer (20) verschlossen sind,
∘ die zweite radiale Öffnung (62a) in der zweiten Winkelposition gegenüber von der zweiten Eingangs-/Ausgangsstelle (22) angeordnet ist und die ersten und dritten radialen Öffnungen (61b; 61c; 63b; 63c) durch die Wand der Kammer (20) verschlossen sind,
∘ die dritte radiale Öffnung (63a) in der dritten Winkelposition gegenüber von der zweiten Eingangs-/Ausgangsstelle (22) angeordnet ist und die zweiten und dritten radialen Öffnungen (62b; 62c; 63b; 63c) durch die Wand der Kammer (20) verschlossen sind.

6. Fluidverteiler (10b) nach Anspruch 5, **dadurch gekennzeichnet, dass**:
- die Achsen der zweiten und dritten radialen Öffnungen (52b; 53b) des ersten Verbindungskanals (5b) und die erste Eingangs-/Ausgangsstelle (21) in einer ersten radialen Ebene (R1) enthalten sind,
- die Achsen der ersten, zweiten und dritten radialen Öffnungen (61b, 62b, 63b) des zweiten Verbindungskanals (6b) und die zweite Eingangs-/Ausgangsstelle (22) in einer zweiten radialen Ebene (R2) enthalten sind,
- die Achse der ersten radialen Öffnung (51b) des ersten Verbindungskanals (5b) und die Verabreichungsstelle (23) in einer dritten radialen Ebene (R3) enthalten sind, die von den ersten und zweiten radialen Ebenen (R1, R2) verschieden ist.

7. Fluidverteiler (10b) nach den Ansprüchen 5 und 6, **dadurch gekennzeichnet, dass**:
- die ersten, zweiten Eingangs-/Ausgangsstellen (21, 22) und die Verabreichungsstelle (23) im Wesentlichen in einer gleichen Mittelebene (P1) des Körpers (2) angeordnet sind, wobei der erste Verbindungskanal (5b) in einer ersten axialen Ebene (A1) des Zapfens (3b) derart angeordnet ist, dass der Durchgang zwischen den ersten und zweiten Winkelpositionen durch die Drehung des Zapfens (3b) in dem Körper (2) um eine halbe Umdrehung erhalten ist,
- die ersten und dritten radialen Öffnungen (61b; 61c; 63b; 63c) des zweiten Verbindungskanals (6b; 6c) in einer zweiten axialen Ebene (A2) des Zapfens (3a) angeordnet ist und die zweite radiale Öffnung (62a) in einer dritten axialen Ebene (A3) des Zapfens (3a) angeordnet ist, die winkelmäßig um 90 ° gegenüber der zweiten axialen Ebene (A2) derart versetzt ist, dass der Durchgang zwischen den ersten und dritten Positionen und der Durchgang zwischen den zweiten und dritten Positionen durch Drehung des Zapfens (3) in dem Körper (2) um eine Viertelumdrehung erhalten ist.

8. Fluidverteiler (10c) nach Anspruch 5, **dadurch gekennzeichnet, dass**:
- die Achsen der ersten und dritten radialen Öffnungen (51c; 53c) des ersten Verbindungskanals (5c) und die erste Eingangs-/Ausgangsstelle (21) in einer ersten radialen Ebene (R1) enthalten sind,
- die Achsen der ersten, zweiten und dritten radialen Öffnungen (61c, 62c, 63c) des zweiten Verbindungskanals (6c) und die zweite Eingangs-/Ausgangsstelle (22) in einer zweiten radialen Ebene (R2) enthalten sind,
- die Achse der zweiten radialen Öffnung (52c) des ersten Verbindungskanals (5c) und die Verabreichungsstelle (23) in einer dritten radialen Ebene (R3) enthalten sind, die von den ersten und zweiten radialen Ebenen (R1, R2) verschieden ist.

9. Fluidverteiler (10a; 10b; 10c) nach einem der Ansprüche 2 und 5, **dadurch gekennzeichnet, dass** er eine ringförmige Dichtung (4) aufweist, die zwischen dem Zapfen (3a; 3b; 3c) und dem Körper (2) vorgesehen ist, wobei die ringförmige Dichtung (4) einen ersten vollen Teil aufweist, der von Öffnungen (40-44) durchquert ist, die dazu bestimmt sind, der ersten radialen Öffnung (51a; 51b; 51c), der zweiten radialen Öffnung (52a; 52b; 52c), der dritten radialen Öffnung (53b; 53c) des ersten Verbindungskanals (5a; 5b; 5c), der ersten radialen Öffnung (61a; 61b; 61c), der zweiten radialen Öffnung (62b; 62c), der dritten radialen Öffnung (63b; 63c) des zweiten Verbindungskanals (6a; 6b; 6c) und der ersten radialen Öffnung (71a) und der zweiten radialen Öffnung (72a) des dritten Verbindungskanals (7a) gegenüber zu liegen, wobei der volle Teil angeordnet ist, um die selektive Dichtheit zwischen den Verbindungskanälen (5a, 6a, 7a; 5b, 6b; 5c, 6c) zu gewährleisten.

10. Vorrichtung zur In-situ-Regeneration und Verabreichung (1a; 1b; 1c) einer Lösung, die durch Mischen von zwei Bestandteilen erhalten ist, die aus einem ersten und einem zweiten Behälter (100, 200) stammen, wobei die Vorrichtung zur In-situ-Regeneration und Verabreichung (1a; 1b; 1c) einen Fluidverteiler (10) aufweiset, der einen Körper (2) und einen Zapfen (3a; 3b; 3c) aufweist, der in dem Körper (2) drehbar ist, motorisierte Antriebsmittel (12) des Zapfens (3a; 3b; 3c), und ein Fluidkreiselement (13) aufweist, das angeordnet ist, um die ersten und zweiten Eingangs-/Ausgangsstellen (21, 22) zu verbinden, **dadurch gekennzeichnet, dass** sie einen Fluidverteiler (10a; 10b; 10c) nach einem der vorhergehenden Ansprüche, motorisierte Antriebsmittel (12) des Zapfens (3a; 3b; 3c), ein Fluidkreiselement (13), das angeordnet ist, um die ersten und zweiten Eingangs-/Ausgangsstellen (21, 22) und den ersten Behälter (100) zu verbinden, eine Umwälzpumpe (14) aufweist, die mit dem Fluidkreiselement (13) verbunden ist.

## Claims

1. A directional control valve (10a; 10b; 10c) for fluid that is adapted to make up a solution in situ by mixing two ingredients coming from a first reservoir (100) and from a second reservoir (200), said valve (10a; 10b; 10c) comprising: a body (2) defining an axial chamber (20) and being provided with radial first and second inlet/outlet (I/O) ports (21, 22) designed to be connected to said first reservoir (100) and to a feed pump (14), and with a radial administering port (23) adapted to enable said solution to exit, said first and second I/O ports (21, 22) and said administering port (23) communicating with said chamber (20); and a rotary spool (3a; 3b, 3c) received in said chamber (20) and through which link channels (5a, 6a, 7a; 5b, 6b; 5c, 6c) pass, said spool (3a; 3b; 3c) being provided with axial third and fourth I/O ports (31, 32) designed to be connected to said second reservoir (200) and communicating with said link channels (5a, 6a; 5b, 6b; 5c, 6c), said link channels (5a, 6a, 7a; 5b, 6b; 5c, 6c) being arranged to interconnect said first, second, third, and fourth I/O ports (21, 22, 31, 32) and said administering port (23) selectively and for fluid flow, depending on the angular position of the spool (3a; 3b; 3c) relative to said body (2) so that, in a first angular position, they connect said first I/O port (21) to said third I/O port (31), and close off said second I/O port (22) and said fourth I/O port (32) so that, by means of said feed pump (14), they enable the ingredient to be transferred between said first reservoir (100) and said second reservoir (200), said valve being **characterized in that** said link channels (5a, 6a, 7a; 5b, 6b; 5c, 6c) are arranged so that:
· in a second angular position, said link channels connect said first I/O port (21) to said third I/O port (31) and connect said-second I/O port (22) to said fourth I/O port (32) so that, by means of said feed pump (14), they enable the mixture to be transferred and blended between said first and second reservoirs (100, 200); and
· in a third angular position, said link channels connect said first I/O port (21) to said administering port (23), and close off said second I/O port (22), said third I/O port (31), and said fourth I/O port (32) so that, by means of said feed pump (14) they enable the resulting solution to be administered.

2. A directional control valve (10a) according to claim 1, **characterized in that** said link channels (5a, 6a, 7a) comprise the following three link channels:
· a first link channel (5a) in the shape of an upside-down T having its central branch provided with said third I/O port (31), having a first radial branch provided with a first radial opening (51a), and having a second radial branch provided with a second radial opening (52a), said first link channel (5a) being arranged so that:
- in said first angular position, said first radial opening (51a) is situated in register with said first I/O port (21) and said second radial opening (52a) is closed off by the wall of said chamber (20);
- in said second angular position, said second radial opening (52a) is situated in register with said first I/O port (21) and said first radial opening (51a) is closed off by the wall of said chamber (20); and
- in said third angular position, said first and second radial openings (51a, 52a) are closed off by the wall of said chamber (20);
· a second link channel (6a) in the shape of an upside-down L having its long bar provided with said fourth I/O port (32) and having its short bar provided with a first radial opening (61a), said second link channel (6a) being arranged so that:
- in said first and third angular positions, said first radial opening (61a) is closed off by the wall of said chamber (20); and
- in said second angular position, said first radial opening (61a) is situated in register with said second I/O port (22);
· a third link channel (7a) passing radially through said spool (3a) and provided with a first radial opening (71a) and with a second radial opening (72a), said third link channel (7a) being arranged so that:
- in said first and second angular positions, said first and second radial openings (71a, 72a) are closed off by the wall of said chamber (20); and
- in said third angular position, said first radial opening (71a) is situated in register with said first I/O port (21) and said second radial opening (72a) is situated in register with said administering port (23).

3. A directional control valve (10a) according to claim 2, **characterized in that**:
· the axes of said first and second radial openings (51a, 52a) of said first link channel (5a), of said first radial opening (71a) of said third link channel (7a) and said first I/O port (21) lie in a first radial plane (R1) ;
· the axes of said first radial opening (61a) of said second link channel (6a) and said second I/O port (22) lie in a second radial plane (R2) distinct from said first radial plane (R1); and
· the axis of said second radial opening (72a) of said third link channel (7a) and said administering port (23) lie in a third radial plane (R3) distinct from said first and second radial planes (R1, R2).

4. A directional control valve (10a) according to claim 3, **characterized in that**:
- said first I/O port (21), said second I/O port (22), and said administering port (23) are situated in the same midplane (P1) of said body (2), and said first and second link channels (5a, 6a) are situated in the same first axial plane (A1) of said spool (3a); and
- said third link channel (7a) is situated in a second axial plane (A2) of said spool (3a) that is offset angularly by 90° relative to said first axial plane (A1); so that going between said first and second angular positions is obtained by turning said spool (3a) through a half-turn in said body (2) and so that, going between said first and third positions and going between said second and third positions is obtained by turning said spool (3a) through respective quarter-turns in said body (2).

5. A directional control valve (10b; 10c) according to claim 1, **characterized in that** said link channels (5b, 6b; 5c, 6c) comprise the following two link channels:
· a first link channel (5b; 5c) in the shape of an upside-down L that is provided with a plurality of short bars, that has its long bar provided with said third I/O port (31), that has a first one of its short bars provided with a first radial opening (51b; 51c), that has a second one of its short bars provided with a second radial opening (52b; 52c), and that has a third one of its short bars provided with a third radial opening (53b; 53c), said first link channel (5b; 5c) being arranged so that:
- in said first angular position, said first, second, and third radial openings (51b, 52b, 53b; 51c, 52c, 53c) are closed off by the wall of said chamber (20) ;
- in said second angular position, said second radial opening (52b; 52c) is situated in register with said first I/O port (21) and said first and third radial openings (51b, 53b; 51c, 53c) are closed off by the wall of said chamber (20); and
- in said third angular position, said third radial opening (53b; 53c) is situated in register with said first I/O port (21), said first radial opening (51b; 51c) is situated in register with said administering port (23), and said second radial opening (52b; 52c) is closed off by the wall of said chamber (20); and
· a second link channel (6b; 6c) in the shape of an upside-down T that is provided with a plurality of radial branches, that has its central branch provided with said fourth I/O port (32), that has a first one of its radial branches provided with a first radial opening (61b; 61c), that has a second one of its radial branches provided with a second radial opening (62b; 62c), and that has a third one of its radial branches provided with a third radial opening (63b; 63c), said second link channel (6b; 6c) being arranged so that:
- in said first angular position, said first radial opening (61a) is situated in register with said second I/O port (22) and said second and third radial openings (62b; 62c; 63b; 63c) are closed off by the wall of said chamber (20);
- in said second angular position, said second radial opening (62a) is situated in register with said second I/O port (22) and said first and third radial openings (61b; 61c; 63b; 63c) are closed off by the wall of said chamber (20); and
- in said third angular position, said third radial opening (63a) is situated in register with said second I/O port (22) and said second and third radial openings (62b; 62c; 63b; 63c) are closed off by the wall of said chamber (20).

6. A directional control valve (10b) according to claim 5, **characterized in that**:
· the axes of said second and third radial openings (52b; 53b) of said first link channel (5b), and said first I/O port (21) lie in a first radial plane (R1);
· the axes of said first, second and third radial openings (61b, 62b, 63b) of said second link channel (6b), and said second I/O port (22) lie in a second radial plane (R2);
· the axis of said first radial opening (51b) of said first link channel (5b) and said administering port (23) lie in a third radial plane (R3) distinct from said first and second radial planes (R1, R2).

7. A directional control valve (10b) according to claims 5 and 6, **characterized in that**:
· said first and second I/O ports (21, 22) and said administering port (23) are substantially situated in the same midplane (P1) of said body (2), and said first link channel (5b) is situated in a first axial plane (A1) of said spool (3b) so that going between said first and second angular positions is obtained by turning said spool (3b) through a half-turn in said body (2); and
· said first and third radial openings (61b; 61c; 63b; 63c) of said second link channel (6b; 6c) are situated in a second axial plane (A2) of said spool (3a) and said second radial opening (62a) is situated in a third axial plane (A3) of said spool (3a) that is angularly offset by about 90° relative to said second axial plane (A2) so that going between said first and third positions and going between said second and third positions is obtained by turning said spool (3) through respective quarter-turns in said body (2).

8. A directional control valve (10c) according to claim 5, **characterized in that**:
· the axes of said first and third radial openings (51c; 53c) of said first link channel (5c), and said first I/O port (21) lie in a first radial plane (R1);
· the axes of said first, second and third radial openings (61c, 62c, 63c) of said second link channel (6c), and said second I/O port (22) lie in a second radial plane (R2); and
· the axis of said second radial opening (52c) of said first link channel (5c) and said administering port (23) lie in a third radial plane (R3) distinct from said first and second radial planes (R1, R2).

9. A directional control valve (10a; 10b; 10c) according to any one of claims 2 to 5, **characterized in that** it further comprises an annular seal (4) provided between said spool (3a; 3b; 3c) and said body (2), said annular seal (4) having a solid portion through which orifices (40-44) pass that are designed to be in register with said first radial opening (51a; 51b; 51c), said second radial opening (52a; 52b; 52c), and said third radial opening (53b; 53c) of said first link channel (5a; 5b; 5c), with said first radial opening (61a; 61b; 61c), said second radial opening (62b; 62c), and said third radial opening (63b; 63c) of said second link channel (6a; 6b; 6c), and with said first radial opening (71a) and said second radial opening (72a) of said third link channel (7a), said solid portion being arranged to provide selective sealing between said link channels (5a, 6a, 7a; 5b, 6b; 5c, 6c).

10. In-situ making-up and administering apparatus (1a; 1b; 1c) for making up in situ and for administering a solution obtained by mixing two ingredients coming from first and second reservoirs (100, 200), said in-situ making-up and administering apparatus including a directional control valve (10) for fluid, the valve comprising a body (2) and a spool (3a; 3b; 3c) mounted to move in rotation in said body (2), motor-drive means (12) for driving said spool (3a; 3b; 3c), and a fluid-flow circuit element (13) arranged to interconnect said first and second I/O ports (21, 22), said apparatus being **characterized in that** it includes a directional control valve (10a; 10b, 10c) according to any preceding claim, motor-drive means (12) for driving said spool (3a; 3b; 3c), a fluid-flow circuit element (13) arranged to interconnect said first and second I/O ports (21, 22) and said first reservoir (100), and a feed pump (14) connected to said fluid-flow circuit element (13).
